# EUROPÄISCHE PATENTSCHRIFT

(11) **EP 3 210 714 B1**
(45) Veröffentlichungstag und Bekanntmachung des Hinweises auf die Patenterteilung: **14.10.2020**
(21) Anmeldenummer: 17158625.8
(22) Anmeldetag: 07.07.2014
(51) Int. Cl.: B23K 26/03, B23K 26/06, B23K 26/38, B23K 31/12

(54) **VORRICHTUNG UND VERFAHREN ZUR ÜBERWACHUNG, INSBESONDERE ZUR REGELUNG, EINES SCHNEIDPROZESSES**
DEVICE AND METHOD FOR MONITORING AND IN PARTICULAR CONTROLLING A CUTTING PROCESS
DISPOSITIF ET PROCÉDÉ DE SURVEILLANCE, EN PARTICULIER DE RÉGLAGE D'UN PROCESSUS DE COUPE

(30) Priorität: 13.09.2013 DE 102013218421
(43) Veröffentlichungstag der Anmeldung: 30.08.2017
(62) Teilanmeldung aus: 14741231.6
(73) Patentinhaber: TRUMPF Werkzeugmaschinen GmbH + Co. KG, 71254 Ditzingen (DE)
(72) Erfinder: Regaard, Boris, 70499 Stuttgart (DE); Schindhelm, David, 70499 Stuttgart (DE)
(74) Vertreter: Kohler Schmid Möbus Patentanwälte

(56) Entgegenhaltungen:
- WO-A1-2012/107331
- WO-A1-2012/163545
- DE-A1-102008 030 374
- DE-A1-102008 053 397
- US-A1- 2005 029 326

## Beschreibung

Die vorliegende Erfindung betrifft eine Vorrichtung zur Überwachung, insbesondere zur Regelung, eines Schneidprozesses an einem Werkstück, sowie ein zugehöriges Verfahren gemäß den unabhängigen Ansprüchen.

Eine Vorrichtung zur Überwachung eines Laserschneidprozesses, die zur Erfassung von charakteristischen Kenngrößen eines Laserschneidprozesses, beispielsweise eines bevorstehenden Schnittabrisses, dienen kann, ist aus der WO 2012/107331 A1 der Anmelderin bekannt geworden. Ein drohender Schnittabriss wird dort beim Unterschreiten einer vorgegebenen Spaltbreite des Schnittspalts erkannt. Alternativ oder zusätzlich wird die Fläche der beobachteten Schneidfront mit einer Referenzfläche verglichen, welche der Fläche der Schneidfront bei einem Gutschnitt bzw. Qualitätsschnitt entspricht. Ein Schnittabriss kann auch detektiert werden, falls die von der Referenzfläche emittierte Strahlungsintensität einen Grenzwert für die Soll-Helligkeit bei einem Normalschnitt überschreitet.

In der WO 2013/053832 A1 wird eine Vorrichtung beschrieben, welche bei einem Laserschneidprozess zurückgestreutes Licht misst, um die Schnittqualität zu überprüfen. Die gemessene Intensität des zurückgestreuten Lichts ist geringer, wenn der Schnitt sich tatsächlich durch das Werkstück erstreckt. Um den Abtransport von Schlacke zu optimieren, werden die Frequenz bzw. der Druck von beim Schneidprozess verwendeten Gaspulsen mittels einer Steuerungseinrichtung so angepasst, dass die gemessene Intensität des zurückgestreuten Lichts einen minimalen Wert annimmt.

Generelle Ursache für einen Schnittabriss ist eine unzureichende Energieeinbringung in das Werkstück. Die zu geringe Streckenenergie führt zu einer Abflachung der Schneidfront, d.h. zu einer Vergrößerung des Schneidfrontwinkels, wodurch die Schmelze an der Schnittunterkante nicht mehr vollständig ausgetrieben werden kann und in der Schnittfuge erstarrt. Der Verschluss der Schnittunterkante führt zu Prozessunregelmäßigkeiten, die i.d.R. einen Trennschnitt dauerhaft verhindern. Der Schneidfrontwinkel, der eine charakteristische Kenngröße des Schnittspalts darstellt, ist daher ein Indikator für einen drohenden Schnittabriss.

Die Schneidfront bzw. der Schneidfrontwinkel kann prinzipiell durch eine senkrechte Beobachtung der vom Wechselwirkungsbereich ausgehenden Temperaturstrahlung koaxial zum Hochleistungsstrahl messbar gemacht werden. Bei bekannter Werkstückdicke kann anhand der Länge des abstrahlenden Bereichs in der Schnittfuge auf den Schneidfrontwinkel geschlossen werden. Problematisch ist dabei, dass ein abtropfender Schmelzfaden unterhalb des Werkstücks zu einer Verlängerung des abstrahlenden Bereichs führt, so dass eine Messung des Schneidfrontwinkels auf diese Weise nicht zuverlässig möglich ist.

In der WO 2012/107331 A1 wird vorgeschlagen, eine Schneidfrontoberkante und eine Schneidfrontunterkante als Materialbegrenzungen des Werkstücks zu detektieren und daraus unter Berücksichtigung der Dicke des Werkstücks den Schneidfrontwinkel des Laserschneidprozesses zu ermitteln. Zu diesem Zweck wird der Abstand zwischen der Schneidfrontoberkante und der Schneidfrontunterkante entlang der Spaltmitte des Schnittspalts bzw. der Schnittfuge typischer Weise im sichtbaren Wellenlängenbereich gemessen. Weicht der Schneidfrontwinkel von einem Sollwert bzw. einem Sollbereich ab, kann dies auf einen Schneidfehler oder einen nicht optimalen Arbeitspunkt hindeuten, der durch geeignete Maßnahmen, z.B. durch eine Anpassung der Schnittgeschwindigkeit, korrigiert werden kann.

Bei der koaxialen Prozessbeobachtung durch die Schneiddüse hindurch besteht sowohl bei der Beobachtung der Temperaturstrahlung, der rückgestreuten Hochenergiestrahlung als auch bei der Beobachtung von Materialbegrenzungen das Problem, dass der Beobachtungsbereich durch die in der Regel kreisförmige Innenkontur der Schneiddüse begrenzt ist. Insbesondere bei Brennschneidprozessen werden kleine Düsendurchmesser eingesetzt, so dass die Schneidfrontunterkante auch bei einem Gutschnitt außerhalb des durch die Düsenmündung begrenzten Beobachtungsbereichs liegt und der Schneidfrontwinkel nicht zuverlässig bestimmt werden kann.

In der DE 10 2011 016 519 A1 sind ein Verfahren und eine Vorrichtung zum Steuern der Bearbeitung eines Werkstücks mittels eines hochenergetischen Bearbeitungsstrahls beschrieben, bei dem der Bearbeitungsstrahl durch eine Linse hindurchtritt, die zum Verschieben einer Auftreffstelle des Bearbeitungsstrahls auf das Werkstück senkrecht zu ihrer optischen Achse bewegt werden kann. In einem Beispiel ist eine Überwachungskamera zur Erzeugung eines elektronisch auswertbaren Bildes vorgesehen, deren Abbildungsstrahlengang durch die Linse auf die Auftreffstelle fokussiert wird.

Aus der WO 2012/107331 A1 ist es auch bekannt, anhand des Bildes des Wechselwirkungsbereichs auf das Vorliegen oder Fehlen einer Gratbildung am Schnittspalt zu schließen. Beispielsweise kann bei einem Schmelzschneidprozess anhand des Fehlens einer wiederkehrenden Schwankung der Intensität des Wärmebildes im Bereich des Schnittspalts und/oder beim Auftreten von drei von der Schneidfront ausgehenden Leuchtstreifen auf das Vorliegen einer Gratbildung geschlossen werden. Bei einem Baustahl-Brennschneidprozess (unter Verwendung von Sauerstoff als Schneidgas) können im Wärmebild oder im sichtbaren Wellenlängenbereich periodisch wiederkehrende Rillen bzw. Riefen an den Schnittkanten der Schnittfuge detektiert werden und anhand der Frequenz der Riefen kann auf einen bevorstehenden Materialabbrand geschlossen werden.

Aus der Dissertation "Überwachung, Regelung und Automatisierung beim Hochgeschwindigkeitsschneiden von Elektroblechen mit Laserstrahlen" von Frank Schneider, Shaker Verlag, 2005, wird das Hochgeschwindigkeitsschneiden mit Schneid- bzw. Vorschubgeschwindigkeiten von bis zu 100 m/min thematisiert. Bei dieser Anwendung kann sich hinter der Schneidfront ein Schmelzestau ausbilden, der bei hoher Geschwindigkeit so groß werden kann, dass die Kapillare zwischen der Schmelze und der Schneidfront temporär vom Schmelzefluss nach unten verschlossen wird. In diesem Fall wird die Laserstrahlung aus der verstopften Kapillare zurück reflektiert und von einem Pyrodetektor oder einer Thermosäule in schleppender bzw. nachlaufender Beobachtung gemessen. Bei der schleppenden Beobachtung und bei hohen Geschwindigkeiten kommt es zu starken, kurzen Reflexionen und somit zu einem stark fluktuierenden gemessenen Signal. Da die Standardabweichung des gemessenen Signals mit zunehmender Geschwindigkeit typischer Weise zunimmt, kann der Hochgeschwindigkeitsschneidprozess anhand der Standardabweichung geregelt werden.

In der DE 102008030374 A1 sind eine CO₂-Laserschneidmaschine und ein Verfahren zum Laserschneiden eines metallischen Werkstücks beschrieben. Bei dem Verfahren wird die Wellenlänge des Laserstrahls in Abhängigkeit von der Dicke des Werkstücks aus einem Intervall zwischen 9 µm und 12 µm ausgewählt.

In der DE 10 2008 053 397 A1 ist ein Verfahren zum Schmelzschneiden von Werkstücken mit Laserstrahlung beschrieben, bei dem der Wirkungsgrad und der Absorptionsgrad gegenüber bekannten Verfahren erhöht werden sollen. Bei dem Verfahren wird bei vorgegebener Werkstückdicke eine maximale Absorption der Laserstrahlung erreicht, indem der Neigungswinkel der Schneidfront durch eine Anpassung der Geometrie eines Laserstrahls mittels Strahlformung und/oder eine der Vorschubbewegung überlagerte Bewegung des Brennpunktes des Laserstrahls verändert wird.

Aus der WO 2012/107331 A1 sind eine Vorrichtung und ein Verfahren gemäß dem Oberbegriff der Ansprüche 1 und 7 bekannt geworden.

### Aufgabe der Erfindung

Der Erfindung liegt die Aufgabe zugrunde, eine Vorrichtung und ein zugehöriges Verfahren zur Überwachung, insbesondere zur Regelung, eines Schneidprozesses bereitzustellen, die eine vorteilhafte Regelung des Schneidprozesses ermöglichen.

### Gegenstand der Erfindung

Ein erster Aspekt der Erfindung betrifft eine Vorrichtung der eingangs genannten Art, bei der die Regeleinrichtung ausgebildet ist, den Stellparameter zur Regelung des Schneidfrontwinkels in Abhängigkeit von einer an dem Werkstück zu schneidenden Kontur auszuwählen, wobei die Regeleinrichtung ausgebildet ist, als Stellparameter zur Regelung des Schneidfrontwinkels die Vorschubgeschwindigkeit zwischen dem Hochenergiestrahl und dem Werkstück zu beeinflussen, wenn die Vorschubgeschwindigkeit durch das Material und die Dicke des Werkstücks und nicht durch die Geometrie einer an dem Werkstück zu schneidenden Kontur auf einen maximalen Wert begrenzt ist, und wobei die Regeleinrichtung ausgebildet ist, als Stellparameter zur Regelung des Schneidfrontwinkels die Leistung des Hochenergiestrahls zu beeinflussen, wenn die Vorschubgeschwindigkeit zwischen dem Hochenergiestrahl und dem Werkstück durch die Geometrie einer an dem Werkstück zu schneidenden Kontur auf einen maximalen Wert begrenzt ist.

Der vorgegebene, konstante Wert des Schneidfrontwinkels stimmt typischer Weise mit dem vorgegebenen Schneidfrontwinkel überein, sofern dessen Über- oder Unterschreitung ermittelt wird.

Die Erfinder haben erkannt, dass es zur Regelung des Schneidprozesses mittels eines Hochenergiestrahls, insbesondere mittels eines Laserstrahls, günstig ist, die dreidimensionale Form der Schnittfront, insbesondere den Schneidfrontwinkel, als Regelgröße zu verwenden, d.h. die Schneidfrontsteigung bzw. den Schneidfrontwinkel auf einen vorgegebenen, konstanten Soll-Wert zu regeln. Zu diesem Zweck wird der Ist-Wert des Schneidfrontwinkels und/oder es wird die Überschreitung und/oder Unterschreitung des vorgegebenen Schneidfrontwinkels ermittelt. Die momentane Form der Schneidfront bzw. der momentane Schneidfrontwinkel wird somit als Ist-Wert für die Regelung verwendet. Als Stellgröße wird typischer Weise die in das Werkstück eingebrachte Streckenenergie derart beeinflusst, dass sich für eine jeweilige Materialart und Materialdicke des Werkstücks eine konstante Sollgeometrie bzw. eine konstante Schneidfrontsteigung einstellt.

Es hat sich gezeigt, dass die Schneidfrontsteigung bzw. der Schneidfrontwinkel direkt mit der Schnittabrissgrenze korrelieren und sich bei einer an die jeweilige Strahlkaustik des Hochenergiestrahls angepassten Schneidfrontsteigung ein optimaler Bearbeitungspunkt einstellt, der kurz unterhalb der Schnittabrissgrenze gehalten werden kann. Unterschiedliche Chargen des gleichen Materials, die produktionsbedingt unterschiedliche Schneidneigungen und Schnittabrissgrenzen aufweisen, weisen jeweils kurz unterhalb der individuellen Schnittabrissgrenze die gleiche Schneidfrontsteigung bzw. die gleiche Form der Schneidfront auf.

Bei den Stellparametern des Schneidprozesses, die zur Regelung des Schneidfrontwinkels beeinflusst werden können, handelt es sich typischer Weise um Stellparameter, die die in das Werkstück eingebrachte Streckenenergie beeinflussen. Die Streckenenergie entspricht der durch den Hochenergiestrahl zugeführten Energie pro Längeneinheit (z.B. cm) entlang der Schnittfuge. Bei den Stellparametern kann es sich u.a. um die Vorschubgeschwindigkeit zwischen dem Hochenergiestrahl und dem Werkstück, um die Leistung des Hochenergiestrahls, um die Strahlkaustik bzw. die Fokuslage des Hochenergiestrahls sowie um die Gasmischung und die Gaszufuhr (d.h. beispielsweise den Volumenstrom) des beim Schneidprozess verwendeten Schneidgases handeln.

Erfindungsgemäß ist die Regeleinrichtung dazu ausgebildet, den Stellparameter zur Regelung des Schneidfrontwinkels in Abhängigkeit von der zu schneidenden Kontur, insbesondere in Abhängigkeit von einem Krümmungsradius der zu schneidenden Kontur, auszuwählen. Es hat sich gezeigt, dass die Wahl des Stellparameters für die Regelung des Schneidfrontwinkels auf den konstanten Soll-Wert von der Geometrie der zu schneidenden Kontur, insbesondere von deren Krümmungsradius, abhängig ist, da bei entsprechend kleinem Krümmungsradius bzw. beim Schneiden einer vergleichsweise kleinen Kontur die Vorschubgeschwindigkeit durch die Dynamik der an der Bewegung beteiligten Achsen begrenzt wird. In diesem Fall ist es günstig, nicht die Vorschubgeschwindigkeit sondern einen anderen Stellparameter, beispielsweise die Leistung des Hochenergiestrahls, für die Regelung des Schneidprozesses zu verwenden. Die Vorschubgeschwindigkeit kann aber als Stellgröße verwendet werden, wenn die Leistung des Hochenergiestrahls ihren maximalen Wert erreicht, was typischer Weise beim Schneiden von längeren geraden Konturen (mit unendlich großem Krümmungsradius) der Fall ist.

Erfindungsgemäß ist die Regeleinrichtung weiter dazu ausgebildet, als Stellparameter zur Regelung des Schneidfrontwinkels die Vorschubgeschwindigkeit zwischen dem Hochenergiestrahl und dem Werkstück zu beeinflussen, wenn die Vorschubgeschwindigkeit durch das Material und die Dicke des Werkstücks - und nicht durch die Geometrie einer an dem Werkstück zu schneidenden Kontur - auf einen maximalen Wert begrenzt ist. Die maximale Vorschubgeschwindigkeit wird typischer Weise beim Schneiden einer (langen) geraden Kontur erreicht, d.h. bei einer Schnittfuge, die entlang einer Geraden verläuft. Die maximale Vorschubgeschwindigkeit wird in diesem Fall nicht durch die Dynamik der an der Bewegung beteiligten Achsen begrenzt, sondern durch die Art und die Dicke des geschnittenen Werkstückmaterials, da beim Überschreiten der maximalen Vorschubgeschwindigkeit früher oder später ein Schnittabriss auftritt. Durch die Verwendung der Vorschubgeschwindigkeit als Stellgröße kann die Vorschubgeschwindigkeit derart angepasst werden, dass der gewünschte konstante Schneidfrontwinkel erreicht und ein Schnittabriss verhindert wird.

Bei einer Weiterbildung ist die Regeleinrichtung ausgebildet, während der Beeinflussung der Vorschubgeschwindigkeit die Leistung des Hochenergiestrahls auf einem konstanten, insbesondere maximalen Wert zu halten. Die Produktivität des Schneidprozesses kann erhöht werden, wenn beim Schneiden von Konturen, bei denen die Dynamik der an der Bewegung beteiligten Achsen die Vorschubgeschwindigkeit nicht nach oben begrenzt, die Leistung des Hochenergiestrahls, beispielsweise des Laserstrahls, auf einem konstanten Wert gehalten wird. Bei dem konstanten Wert handelt es sich insbesondere um einen für die jeweilige Vorrichtung (z.B. Laserschneidmaschine) sowie für die jeweilige Art und die Dicke des Werkstückmaterials maximalen Wert, der für viele Materialien mit der maximal möglichen Leistung der Strahlquelle, z.B. einer Laserquelle, übereinstimmt, die den Hochenergiestrahl erzeugt. Auf diese Weise kann die in das Werkstück eingebrachte Streckenenergie maximiert werden.

Erfindungsgemäß ist die Regeleinrichtung weiter dazu ausgebildet, als Stellparameter zur Regelung des Schneidfrontwinkels die Leistung des Hochenergiestrahls zu beeinflussen, wenn die Vorschubgeschwindigkeit zwischen dem Hochenergiestrahl und dem Werkstück durch die Geometrie einer an dem Werkstück zu schneidenden Kontur auf einen maximalen Wert begrenzt ist. Anders als bei der oben beschriebenen Ausführungsform wird in diesem Fall die maximale Vorschubgeschwindigkeit durch die Dynamik der an der Bewegung zwischen dem Hochenergiestrahl und dem Werkstück beteiligten Achsen begrenzt, die ein Nachfahren der zu schneidenden Kontur mit der gewünschten Genauigkeit ermöglichen müssen. In diesem Fall ist es günstig, als Stellgröße für die Regelung des Schneidfrontwinkels nicht die Vorschubgeschwindigkeit, sondern die Leistung des Hochenergiestrahls zu verwenden, da auf diese Weise die Prozessfähigkeit des Schneidprozesses erhöht werden kann.

Bevorzugt ist die Regeleinrichtung ausgebildet, während der Beeinflussung der Leistung des Hochenergiestrahls die Vorschubgeschwindigkeit auf dem für das Schneiden der Kontur maximal möglichen Wert zu halten, wenn die Vorschubgeschwindigkeit zwischen dem Hochenergiestrahl und dem Werkstück durch die Geometrie einer an dem Werkstück zu schneidenden Kontur auf einen maximalen Wert begrenzt ist, um den Schneidprozess mit der maximal möglichen Geschwindigkeit durchzuführen. Der maximal mögliche Wert der Vorschubgeschwindigkeit kann entlang der zu schneidenden Kontur variieren.

Bei einer Weiterbildung ist die Regeleinrichtung ausgebildet, die Leistung des Hochenergiestrahls zu modulieren und als Stellparameter zur Regelung des Schneidfrontwinkels die Pulsfrequenz und/oder die Pulsdauer der gepulst erzeugten Leistung des Hochenergiestrahls zu beeinflussen. Der Hochenergiestrahl wird typischer Weise im so genannten "continuous wave" bzw. Dauerstrichbetrieb eingesetzt, bei dem die Leistung kontinuierlich erzeugt wird und die Amplitude der Leistung reduziert oder gesteigert wird. Insbesondere beim Schneiden von sehr kleinen Konturen (mit sehr kleinen Krümmungsradien) können die Schnittqualität und die Prozessfähigkeit optimiert werden, indem die Leistung moduliert wird, d.h. der Hochenergiestrahl nicht dauernd eingeschaltet ist. Beispielsweise kann die Leistung in diesem Fall gepulst erzeugt werden und die Leistungsmodulation kann als Stellgröße für die Regelung des Schneidfrontwinkels verwendet werden.

Bei einer weiteren Ausführungsform ist die Auswerteeinrichtung ausgebildet, eine Überschreitung des vorgegebenen Schneidfrontwinkels der Schnittfuge zu ermitteln und die Regeleinrichtung weist zur Regelung des Schneidfrontwinkels einen unstetigen Regler, insbesondere eine Zweipunktregler oder einen Dreipunktregler, auf. Wie weiter oben beschrieben wurde, kann die Auswerteeinrichtung ausgebildet sein, den Betrag des Schneidfrontwinkels nicht absolut zu messen, sondern lediglich ein Überschreiten oder ggf. ein Unterschreiten eines vorgegebenen Schneidfrontwinkels zu detektieren.

In diesem Fall ist für die Regelung ein unstetiger Regler, beispielsweise in Form eines Zweipunktreglers oder eines Dreipunktreglers, vorteilhaft. Insbesondere kann die Regelung bei der Zweipunktmessung bzw. bei einem Zweipunktregler auch dadurch umgesetzt werden, dass die Schneidfront um den Sollwert des Schneidfrontwinkels pendelt. Da der Schneidprozess dynamisch abläuft, ist der Schneidfrontwinkel niemals absolut konstant. Ein Pendeln um den vorgegebenen, konstanten Schneidfrontwinkel ist aber auf die weiter oben beschriebene Weise messbar. Auch die Pendelfrequenz kann ggf. bei der Regelung des Schneidfrontwinkels berücksichtigt werden. Auch laufen "Wellen" über die Schneidfront, deren Vorhandensein ein Kriterium für eine gut eingestellte Streckenenergie bzw. einen Gutschnitt bilden kann.

Bei einer weiteren Ausführungsform ist die Auswerteeinrichtung ausgebildet, den Schneidfrontwinkel der Schnittfuge zu ermitteln, und die Regeleinrichtung weist zur Regelung des Schneidfrontwinkels einen stetigen (beispielsweise linearen) Regler, insbesondere einen PID-Regler, auf. Wie weiter oben beschrieben wurde, ist es auch möglich, den Absolutwert des Schneidfrontwinkels zu ermitteln. In diesem Fall ist es günstig, wenn ein stetiger Regler, beispielsweise ein PID-Regler, für die Regelung verwendet wird. Auch die Umsetzung komplexerer Regelungskonzepte ist möglich.

Ein weiterer Aspekt der Erfindung betrifft ein Verfahren gemäß Anspruch 7.

Bei dem Verfahren wird der Stellparameter zur Regelung des Schneidfrontwinkels in Abhängigkeit von einer zu schneidenden Kontur an dem Werkstück, insbesondere in Abhängigkeit von einem Krümmungsradius einer an dem Werkstück zu schneidenden Kontur, ausgewählt. Wie weiter oben beschrieben wurde, ist es zur Optimierung der Prozessfähigkeit bzw. der Produktivität günstig, in Abhängigkeit von der zu schneidenden Kontur einen geeigneten Stellparameter auszuwählen.

Als Stellparameter zur Regelung des Schneidfrontwinkels wird die Vorschubgeschwindigkeit zwischen dem Hochenergiestrahl und dem Werkstück beeinflusst, wenn die Vorschubgeschwindigkeit durch das Material und die Dicke des Werkstücks und nicht durch die Geometrie einer an dem Werkstück zu schneidenden Kontur auf einen maximalen Wert begrenzt wird. In diesem Fall ist es günstig, wenn während der Beeinflussung der Vorschubgeschwindigkeit die Leistung des Hochenergiestrahls auf einem konstanten, insbesondere maximalen Wert gehalten wird, der insbesondere mit der maximal erzeugbaren Leistung einer Strahlungsquelle übereinstimmen kann, die den Hochenergiestrahl erzeugt.

Als Stellparameter zur Regelung des Schneidfrontwinkels wird die Leistung des Hochenergiestrahls beeinflusst, wenn die Vorschubgeschwindigkeit zwischen dem Hochenergiestrahl und dem Werkstück durch die Geometrie einer an dem Werkstück zu schneidenden Kontur auf einen maximalen Wert begrenzt wird. In diesem Fall ist es günstig, wenn während der Beeinflussung der Leistung des Hochenergiestrahls die Vorschubgeschwindigkeit auf dem maximalen Wert gehalten wird.

Bei einer Weiterbildung wird insbesondere beim Schneiden von Konturen mit sehr kleinen Krümmungsradien die Leistung des Hochenergiestrahls moduliert und als Stellparameter zur Regelung des Schneidfrontwinkels wird die Pulsfrequenz und/oder die Pulsdauer der gepulst erzeugten Leistung des Hochenergiestrahls beeinflusst, wenn die Vorschubgeschwindigkeit zwischen dem Hochenergiestrahl und dem Werkstück durch die Geometrie einer an dem Werkstück zu schneidenden Kontur auf einen maximalen Wert begrenzt ist.

Bei einer weiteren Variante liegt der vorgegebene, konstante Wert, auf den der Schneidfrontwinkel geregelt wird, zwischen 2° und 6°, bevorzugt zwischen 3° und 5°. Diese Werte für den Soll-Wert des Schneidfrontwinkels haben sich bei den meisten zu schneidenden Materialien als günstig herausgestellt, wobei Materialdicken zwischen ca. 3 mm und ca. 25 mm verwendet wurden. Das hier beschriebene Verfahren zur Regelung des Schneidprozesses kann sowohl für Brennschneidprozesse als auch für Schmelzschneidprozesse eingesetzt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung eines Ausführungsbeispiels einer Vorrichtung zur Überwachung und Regelung eines Laserschneidprozesses an einem Werkstück,
- Fig. 1b: eine Darstellung einer Blende zur Bildung eines Beobachtungsstrahls in einer solchen Vorrichtung entlang einer Schnittline B-B von Fig. 1a,
- Fig. 2a-d: vier Darstellungen von Wärmebildern eines Wechselwirkungsbereichs zwischen Laserstrahl und Werkstück aus vier unterschiedlichen, zueinander senkrechten Beobachtungsrichtungen,
- Fig. 3: eine Darstellung analog Fig. 1a mit einer Rasteranordnung zur Erzeugung von Bildern des Wechselwirkungsbereichs aus unterschiedlichen Beobachtungsrichtungen,
- Fig. 3a: eine Darstellung einer an dem Werkstück geschnittenen kreisförmigen Kontur,
- Fig. 4a-c: Detaildarstellungen der Rasteranordnung von Fig. 3,
- Fig. 5a,b: Darstellungen einer Abbildungsoptik für die Vorrichtung von Fig. 1a mit einem Umlenkprisma zur Erzeugung von Bildern des Wechselwirkungsbereichs aus unterschiedlichen Beobachtungsrichtungen,
- Fig. 6a-d: Darstellungen eines Schneidfrontwinkels an einer bei dem Laserschneidprozess gebildeten Schnittfuge bei unterschiedlichen Vorschubgeschwindigkeiten, und
- Fig. 7: eine Darstellung einer Regelung des Schneidfrontwinkels auf einen konstanten Soll-Wert unter Verwendung einer Zweipunktregelung.

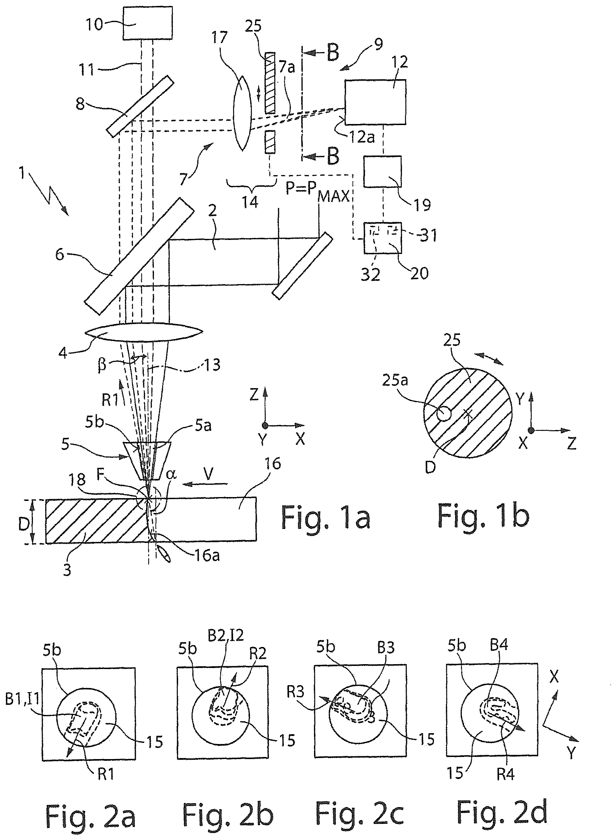

**Fig. 1a** zeigt einen beispielhaften Aufbau einer Vorrichtung 1 zur Überwachung und Regelung eines Laserschneidprozesses an einem Werkstück 3 mittels eines Laserstrahls 2, welche in Form eines Laserbearbeitungskopfs ausgebildet ist, der Teil einer nicht näher dargestellten Laserbearbeitungsmaschine ist. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird für die Durchführung einer schneidenden Bearbeitung an dem Werkstück 3 mittels eines Fokussierelements in Form einer Fokussierlinse 4 auf das Werkstück 3 fokussiert. Bei der Fokussierlinse 4 handelt es sich im gezeigten Beispiel um eine Linse aus Zinkselenid, die den Laserstrahl 2 durch eine Laserbearbeitungsdüse 5, genauer gesagt durch deren Düsenöffnung 5a, auf das Werkstück 3 fokussiert, und zwar im gezeigten Beispiel auf eine Fokusposition F an der Oberseite des Werkstücks 3. Der Laserstrahl 2 bildet dort einen Wechselwirkungsbereich 18 mit dem Werkstück 3, hinter dem entgegen einer Vorschubrichtung v bzw. Schnittrichtung des Laserschneidprozesses eine Schnittfuge 16 erzeugt wird. Im Falle eines Laserstrahls 2 aus einem Festkörperlaser kann eine Fokussierlinse bspw. aus Quarzglas eingesetzt werden.

In Fig. 1a ebenfalls zu erkennen ist ein teildurchlässig ausgebildeter Umlenkspiegel 6, welcher den einfallenden Laserstrahl 2 (bspw. mit einer Wellenlänge von ca. 10,6 µm) reflektiert und für eine Prozessüberwachung relevante Beobachtungsstrahlung zu einem weiteren teildurchlässigen Umlenkspiegel 8 transmittiert. Der Umlenkspiegel 6 ist für Beobachtungsstrahlung in Form von Wärmestrahlung bei Wellenlängen von ca. 800 nm bis 1100 nm, ggf. über 1100 nm, teildurchlässig ausgebildet. Der weitere teildurchlässige Umlenkspiegel 8 reflektiert die Beobachtungsstrahlung zu einer Bilderfassungseinrichtung 9. Eine Beleuchtungsquelle 10 dient zur koaxialen Beleuchtung des Werkstücks 3 mit Beleuchtungsstrahlung 11. Die Beleuchtungsstrahlung 11 wird von dem weiteren teiltransmissiven Umlenkspiegel 8 sowie von dem Umlenkspiegel 6 transmittiert und durch die Düsenöffnung 5a der Laserbearbeitungsdüse 5 hindurch auf das Werkstück 3 gelenkt.

Alternativ zu den teildurchlässigen Umlenkspiegeln 6, 8 können auch Scraperspiegel oder Lochspiegel, welche einfallende Strahlung nur aus einem Randbereich reflektieren, eingesetzt werden, um die Beobachtungsstrahlung 7 der Bilderfassungseinrichtung 9 zuzuführen bzw. um die Beleuchtungsstrahlung 11 dem Werkstück 3 zuzuführen. Auch mindestens ein seitlich in den Strahlengang des Laserstrahls 2 eingebrachter Spiegel kann verwendet werden, um die Beobachtung zu ermöglichen.

Als Beleuchtungsquelle 10 können Diodenlaser oder LEDs oder Blitzlampen vorgesehen werden, die wie in Fig. 1a gezeigt koaxial, aber auch off-axis zur Laserstrahlachse 13 angeordnet werden können. Die Beleuchtungsquelle 10 kann beispielsweise auch außerhalb (insbesondere neben) der Vorrichtung 1 angeordnet und auf das Werkstück 3 gerichtet sein; alternativ kann die Beleuchtungsquelle 10 innerhalb der Vorrichtung 1 angeordnet sein, jedoch nicht koaxial zum Laserstrahl 2 auf das Werkstück 3 ausgerichtet sein. Gegebenenfalls kann die Vorrichtung 1 auch ohne eine Beleuchtungsquelle 10 betrieben werden.

Teil der Bilderfassungseinrichtung 9 ist eine im Beobachtungsstrahlengang 7 hinter dem weiteren teildurchlässigen Umlenkspiegel 8 angeordnete geometrisch hochauflösende Kamera 12. Bei der Kamera 12 kann es sich um eine Hochgeschwindigkeitskamera handeln, die koaxial zur Laserstrahlachse 13 bzw. zur Verlängerung der Laserstrahlachse 13 und somit richtungsunabhängig angeordnet ist. Beim dargestellten Beispiel erfolgt die Aufnahme von Bildern durch die Kamera 12 im Auflichtverfahren im NIR/IR-Wellenlängenbereich, um das Prozesseigenleuchten bzw. ein Wärmebild des Schneidprozesses aufzunehmen. Bei dem in Fig. 1a gezeigten Beispiel kann ein Filter vor der Kamera 12 angeordnet werden, wenn weitere Strahlungs- bzw. Wellenlängenanteile von der Erfassung mit der Kamera 12 ausgeschlossen werden sollen. Der Filter kann z.B. als schmalbandiger Bandpassfilter mit einer Halbwertsbreite von beispielsweise ca. 15 nm ausgebildet sein.

Zur Erzeugung von Bildern B1 bis B4 eines in **Fig. 2a****-d** gezeigten zu überwachenden Bereichs 15 des Werkstück 3, welcher den Wechselwirkungsbereich 18 enthält, auf einer Detektorfläche 12a der Kamera 12 weist die Bilderfassungseinrichtung 9 eine Abbildungsoptik 14 auf. Im gezeigten Beispiel weist die Abbildungsoptik 14 eine Blende 25 auf, die um eine zentrale Drehachse D drehbar gelagert ist, so dass sich bei der Drehung die Position einer exzentrisch angeordneten Blendenöffnung 25a auf einem Kreisbogen um die Drehachse D bewegt.

Durch die Anordnung der Blende 25 in dem mittels einer Linse 17 fokussierten Strahlengangs der Abbildungsoptik 14 tritt nur ein Teil des Beobachtungsstrahlengangs 7, welcher einen Randbereich der Fokussierlinse 4 durchläuft und im konvergenten Strahlengang nach der Fokussierlinse 4 unter einem Winkel β zur Strahlachse 13 des Laserstrahls 2 ausgerichtet ist, durch die exzentrisch zur Verlängerung der Strahlachse 13 des Laserstrahls 2 angeordnete Blendenöffnung 25a hindurch und bildet einen Beobachtungsstrahl 7a, welcher auf der Detektoroberfläche 12a abgebildet wird. Bei dem in Fig. 1a gezeigten Beispiel verläuft eine Beobachtungsrichtung R1 des Beobachtungsstrahls 7a in der Projektion in die XY-Ebene bzw. die Werkstückebene entgegen der Vorschubrichtung v, entlang derer der Laserstrahl 2 und das Werkstück 3 in der XY-Ebene relativ zueinander bewegt werden, um die gewünschte Schnittkontur zu bilden.

Es versteht sich, dass an Stelle einer mechanisch verstellbaren Blende 25 auch eine elektrisch verstellbare Blende, beispielsweise in Form eines LCD-Arrays, verwendet werden kann, bei der einzelne Pixel oder Pixelgruppen elektronisch an- bzw. ausgeschaltet werden, um die Blendenwirkung zu erzeugen. Auch kann die mechanische Blende 25 anders als in Fig. 1a,b gezeigt quer zum Beobachtungsstrahlengang 7, beispielsweise in der YZ-Ebene, bewegt bzw. verschoben werden, um unterschiedliche Teile des Beobachtungsstrahlengangs 7 abzuschatten bzw. für die Beobachtung zu öffnen. Die Blende 25 kann auch in Form eines oder mehrerer auf- und zuklappbarer mechanischer Elemente realisiert werden.

Wie in Fig. 2a-d zu erkennen ist, wird ein jeweils von der Abbildungsoptik 14 aufgenommenes Bild des zu überwachenden Bereichs 15 des Werkstücks 3 von einer kreisförmigen Innenkontur 5b der Laserschneiddüse 5 begrenzt. Der durch die Innenkontur 5b der Laserschneiddüse 5 begrenzte zu überwachende Bereich 15 enthält ein Bild B1 bis B4 des Wechselwirkungsbereichs 18, das bei den in Fig. 2a-d gezeigten Darstellungen aus unterschiedlich orientierten Beobachtungsrichtungen R1 bis R4 aufgenommen wurde.

Fig. 2a zeigt ein Bild B1 des Wechselwirkungsbereichs 18, welches aus der in Fig. 1a gezeigten Beobachtungsrichtung R1 aufgenommen wurde. Die Projektion der Beobachtungsrichtung R1 in die XY-Ebene ist in Fig. 2a durch einen Pfeil dargestellt. Wie weiter oben beschrieben wurde, verläuft die Beobachtungsrichtung R1 bei dem in Fig. 1a gezeigten Beispiel entgegen der Vorschubrichtung v, d.h. in negativer X-Richtung, was als schleppende Beobachtung in Bezug auf eine Schneidfront 16a an dem Werkstück 3 bezeichnet wird, hinter der sich die Schnittfuge 16 ausbildet. Ein Schneidfrontwinkel α der Schneidfront 16a ist definiert als derjenige Winkel, den eine Verbindungslinie zwischen der Oberkante der Schneidfront 16a an der Oberseite des Werkstücks 3 und der Unterkante der Schneidfront 16a an der Unterseite des Werkstücks 3 mit der Strahlachse 13 des Laserstrahls 2 bzw. mit der Dickenrichtung des plattenförmigen Werkstücks 3 einschließt.

Bei der schleppenden Beobachtung existiert ein Schneidfrontwinkel a, bei dessen Unterschreitung die Schneidfront 16a und damit auch die von dieser ausgehende Wärmestrahlung von der Kante der Schneidfront 16a an der Oberseite des Werkstücks 3 vollständig verdeckt wird, so dass die Schnittfuge 16 bzw. das dem Wechselwirkungsbereich 18 zugeordnete Bild B1 dunkel erscheint. Wird die Steigung der Schneidfront 16a flacher und der Schneidfrontwinkel α größer, ist keine vollständige Verdeckung der Schneidfront 16a durch deren obere Kante mehr gegeben, so dass die Länge der unter schleppender Beobachtung sichtbaren Schneidfront 16a größer wird und die Schnittfuge 16 in Bereichen hell bzw. insgesamt hell erscheint.

Aus einem Helligkeits- bzw. Intensitätswert I1, der aus dem bei der schleppenden Beobachtung aufgenommenen Bild B1 des Wechselwirkungsbereichs 18 bestimmt wird, können Rückschlüsse auf den Schneidfrontwinkel α als charakteristische Kenngröße des Schneidprozesses gezogen werden. Als Intensitätswert I1 kann die gemessene Gesamtintensität des Bildes B1 dienen, der Intensitätswert I1 kann aber auch anhand eines räumlich begrenzten Bereichs des Bildes B1 bestimmt werden, der beispielsweise die Schneidfront 16a enthält. Auch in letzterem Fall wird der Intensitätswert I1 bestimmt, indem die Gesamtintensität in dem räumlich begrenzten Bereich bzw. Bildausschnitt ermittelt wird.

Nimmt der anhand des aufgenommenen Bildes B1 bestimmte Intensitätswert I1 zu, nimmt typischer Weise auch der Schneidfrontwinkel α zu. Anhand einer Zuordnung von Messwerten des Intensitätswerts I1 zu Schneidfrontwinkeln a, die beispielsweise in vorausgehenden Testmessungen ermittelt wurde, lässt sich mittels einer Auswerteeinrichtung 19 aus dem unter schleppender Beobachtung bestimmten Intensitätswert I1 der Schneidfrontwinkel α bestimmen. Zur Erhöhung der Genauigkeit kann es günstig sein, den anhand eines räumlich begrenzten Teilbereichs bzw. Bildausschnitts bestimmten Intensitätswert I1 mit einem weiteren Intensitätswert I2 in Beziehung zu setzen, der anhand eines weiteren räumlich begrenzten Teilbereichs bzw. Bildausschnitts des aufgenommenen Bildes B1 bestimmt wird, der nicht die Schneidfront 16a enthält.

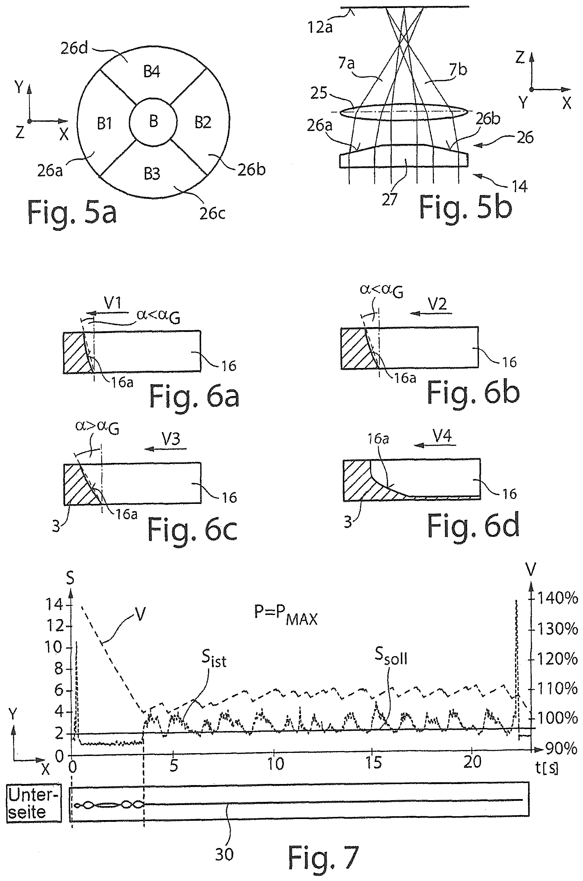

In der Regel ist es für die Steuerung bzw. Regelung des Schneidprozesses jedoch nicht erforderlich, den genauen Wert des Schneidfrontwinkels α zu kennen. Vielmehr kann es ausreichend sein, durch einen Vergleich des Intensitätswerts I1 bzw. einer aus dem Intensitätswert I1 und dem weiteren Intensitätswert I2 gebildeten Größe mit einem Schwellwert I_{S}, bei welchem vom Vorliegen eines Gutschnitts ausgegangen werden kann, auf eine Überschreitung eines kritischen Werts des Schneidfrontwinkels α_{G} zu schließen, bei dem kein Gutschnitt mehr vorliegt (vgl. die Beschreibung weiter unten im Zusammenhang mit Fig. 6a-d).

Es hat sich für die schleppende Beobachtung als günstig erwiesen, wenn der Winkel β der Beobachtungsrichtung R1 zur Strahlachse 13 des Laserstrahls 2 im Wesentlichen mit dem vorgegebenen Schneidfrontwinkel α_{G} übereinstimmt, bei dem noch ein Gutschnitt vorliegt. Insbesondere ist es günstig, wenn die Abweichung bei weniger als 5°, insbesondere bei weniger als 2° liegt. Der Wertebereich, in dem die Abweichung liegt, hängt u.a. von dem Winkelbereich ab, unter dem beobachtet wird (z.B. der Größe der außermittigen Blendenöffnung 25a), so dass die Abweichung ggf. auch größer ausfallen kann.

Für einen vorgegebenen Schneidfrontwinkel α_{G} von 8° sollte der Winkel β der Beobachtungsrichtung R1 zur Strahlachse 13 zwischen 3° und 13°, bevorzugt zwischen 6° und 10° liegen. Geeignete Winkel β der Beobachtungsrichtung R1 zur Strahlachse 13 des Laserstrahls 2 liegen typsicher Weise zwischen ca. 5° und ca. 15°, insbesondere zwischen 5° und 10°, wobei der genaue Wert von der Dicke des Werkstücks 3 sowie vom verwendeten Werkstückmaterial abhängig ist. Der Winkel β der Beobachtungsrichtung R1 zur Strahlachse 13 des Laserstrahls 2, unter dem das Bild B1 aufgenommen wird, ist durch den Abstand zwischen der zentrischen Drehachse D und der Blendenöffnung 25a der Blende 25 vorgegeben. Der Abstand und damit der Winkel β der Beobachtungsrichtung R1 zur Strahlachse 13 des Laserstrahls 2 kann ggf. durch eine Verschiebung der Blende 25 in der YZ-Ebene eingestellt bzw. verändert werden. Für die Beobachtung unter großen Winkeln β von z.B. 6° bzw. 10° oder mehr kann erforderlichenfalls die Fokussierlinse 4 im Durchmesser vergrößert werden oder es kann eine Beobachtung von außerhalb der Fokussierlinse 4 erfolgen, d.h. der Beobachtungsstrahlengang 7 verläuft nicht oder nur teilweise durch die Fokussierlinse 4 hindurch. Auch eine Beobachtung unter kleineren Winkeln β (in der Regel mindestens 2°) ist möglich.

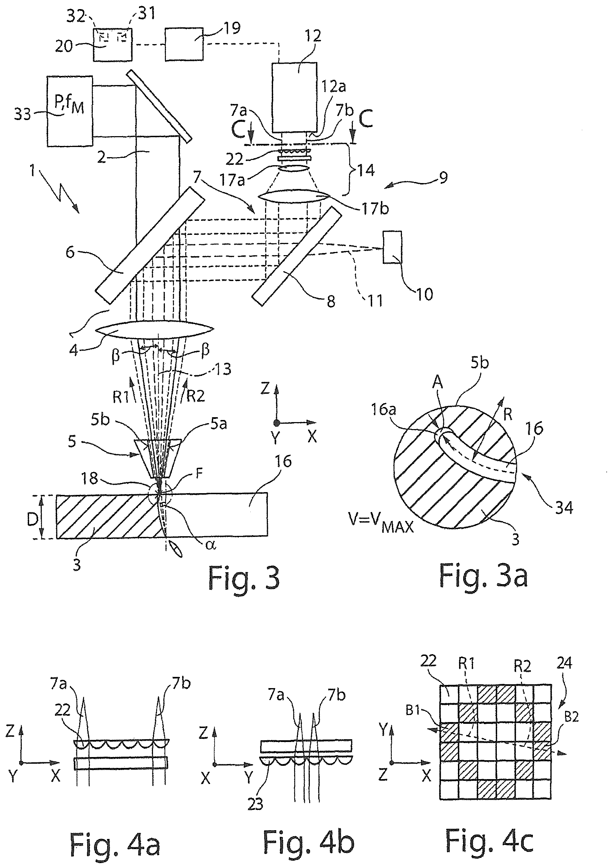

Die Genauigkeit bei der Ermittlung des Schneidfrontwinkels α kann gesteigert werden, wenn dieser in Relation zu einem Intensitätswert I2 eines weiteren Bildes B2 des Wechselwirkungsbereichs 18 gesetzt wird, das aus einer weiteren Beobachtungsrichtung R2 aufgenommen wird. Bei dem in Fig. 2b gezeigten Beispiel ist die weitere Beobachtungsrichtung R2 in der XY-Ebene zur (ersten) Beobachtungsrichtung R1 unter einem Winkel von 180° orientiert, d.h. die weitere Beobachtungsrichtung R2 verläuft (in der Projektion in der XY-Ebene) in Vorschubrichtung (positive X-Richtung), was auch als stechende Beobachtung bezeichnet wird. Um einen Vergleich zwischen den Intensitätswerten I1, I2 zu vereinfachen, die aus den beiden unterschiedlichen Beobachtungsrichtungen R1, R2 aufgenommen wurden, ist der Winkel β, den die beiden Beobachtungsrichtungen R1, R2 zur Strahlachse 13 aufweisen, identisch (vgl. hierzu auch Fig. 3), es können aber ggf. für die unterschiedlichen Beobachtungsrichtungen auch unterschiedliche Winkel gewählt werden.

Der aus dem unter stechender Beobachtung aufgenommenen Bild B2 von Fig. 2b bestimmte Intensitätswert I2 dient als Referenzwert und kann beispielsweise von dem Intensitätswert I1 des unter schleppender Beobachtung aufgenommenen Bildes B1, welches in Fig. 2a gezeigt ist, subtrahiert werden. Die so erhaltene Differenz oder ggf. ein aus den Intensitätswerten I1, I2 gebildeter Quotient I1 / I2 kann in der Auswerteeinrichtung 19 mit dem Schwellwert bzw. Referenzwert I_{ref} verglichen werden, um festzustellen, ob der Schneidfrontwinkel α einen vorgegebenen Schneidfrontwinkel α_{R} überschreitet, bei dem noch ein Gutschnitt vorliegt. Für den Vergleich werden typischer Weise Intensitätswerte I1, I2 verwendet, welche der Gesamtintensität der beiden Bilder B1, B2 bzw. an gleicher Stelle positionierter Teilbereiche der beiden Bilder B1, B2 entsprechen.

Zusätzlich oder alternativ zur den in Fig. 2a,b gezeigten Beobachtungsrichtungen R1, R2, die in bzw. entgegen der Vorschubrichtung v verlaufen, ist es auch möglich, eine Beobachtung des Wechselwirkungsbereichs 18 aus Beobachtungsrichtungen vorzunehmen, die nicht in der Zeichenebene (XZ-Ebene) von Fig. 1a liegen, welche entlang der Mittenebene der Schnittfuge 16 verläuft. Mögliche Beobachtungsrichtungen stellen alle Richtungen dar, die (bei gegebenem Winkel β) vom Fokuspunkt F ausgehend auf einer kegelförmigen Fläche liegen. Da die Ausrichtung bzw. die Orientierung der exzentrischen Blendenöffnung 25a die Beobachtungsrichtung festlegt, kann die Auswahl einer geeigneten Beobachtungsrichtung durch eine Drehung der Blende 25 erfolgen.

Zwei Bilder B3, B4 des Wechselwirkungsbereichs 18, die aus einer dritten Beobachtungsrichtung R3 unter -90° zur X-Richtung (d.h. in negativer Y-Richtung) bzw. aus einer vierten Beobachtungsrichtung R4 unter +90° zur X-Richtung (d.h. in positiver Y-Richtung) aufgenommen wurden, sind in Fig. 2c,d dargestellt. Mit Hilfe der aus diesen beiden Beobachtungsrichtungen R3, R4 aufgenommenen Bilder B3, B4 können die beiden (in Fig. 1a nicht gezeigten) seitlichen Ränder der Schnittfuge 16 genauer beobachtet werden.

Die Auswerteeinrichtung 19 kann anhand der aufgenommenen Bilder B3, B4, die in der XY-Ebene unter einem Winkel von +/-90° zur Vorschubrichtung v verlaufen, eine Gratbildung, Rauigkeit und/oder Riefenbildung als charakteristische Kenngröße(n) der Schnittfuge 16 ermitteln. Beispielsweise kann anhand des Bildes B3, welches aus der dritten Beobachtungsrichtung R3 aufgenommen wurde, ein Riefenbildung bzw. ein Riefenabstand in Schneid- bzw. Vorschubrichtung v sowie eine Riefentiefe an derjenigen seitlichen Kante der Schnittfuge 16 ermittelt werden, welche in Fig. 1a vor der Zeichenebene angeordnet ist.

Entsprechend kann auch anhand des vierten Bildes B4, welches aus der vierten Beobachtungsrichtung R4 aufgenommen wurde, eine Riefenbildung bzw. ein Riefenabstand sowie eine Riefentiefe an derjenigen seitlichen Kante der Schnittfuge 16 ermittelt werden, welche sich hinter der Zeichenebene von Fig. 1a befindet. Die Riefen können beispielsweise in Form von periodisch wiederkehrenden Strukturen (typischer Weise in Form von Aus- bzw. Einbuchtungen) am Rand des Bildes B3, B4 des Wechselwirkungsbereichs 18 erkennbar sein und anhand des Abstandes zwischen den Strukturen kann ein Riefenabstand sowie anhand der Amplitude der Strukturen auf die Riefentiefe geschlossen werden.

Anhand der dritten und vierten Bilder B3, B4 kann die Auswerteeinrichtung 19 auch eine Gratbildung an der Unterseite des Werkstücks 3 und/oder die Rauigkeit an den beiden Schnittspaltflanken bzw. -kanten der Schnittfuge 16 ermitteln. Bei der Gratbildung verläuft die untere Kante der Schnittfuge 16 nicht mehr als horizontale Linie, so dass eine geometrische Abweichung in dem jeweiligen Bild B3, B4 entsteht, die von der Auswerteeinrichtung 19 detektiert werden kann. Es versteht sich, dass für die oben genannten Zwecke die dritte und vierte Beobachtungsrichtung R3, R4 nicht zwingend unter einem rechten Winkel zur Vorschubrichtung v verlaufen müssen. Vielmehr kann ggf. auch eine Beobachtung unter Winkeln erfolgen, die in der XY-Ebene beispielsweise zwischen ca. +70° und +110° (bzw. -70° und -110°) zur Vorschubrichtung verlaufen.

Um eine bestimmte charakteristische Kenngröße, beispielsweise den Schneidfrontwinkel a, auch bei einer Änderung der Vorschubrichtung v während des Schneidens entlang von gekrümmten Schnittkonturen unter einer gewünschten Beobachtungsrichtung, beispielsweise der Beobachtungsrichtung R1 entgegen der Vorschubrichtung v, beobachten zu können, ist es erforderlich, die Ausrichtung der Beobachtungsrichtung R1 in der XY-Ebene in Abhängigkeit von der Vorschubrichtung v bzw. von der Orientierung der Vorschubrichtung v in der XY-Ebene zu verändern. Zu diesem Zweck kann eine Steuer- und Regeleinrichtung 20 dienen, welche die Blende 25 und damit die Blendenöffnung 25a bei der Änderung der Vorschubrichtung v entsprechend um die Drehachse D mitdreht, so dass die Beobachtungsrichtung R1 stets entgegen der Vorschubrichtung v ausgerichtet bleibt. Durch das Mitdrehen der Blende 25 kann auch die Ausrichtung jeder der weiteren in Fig. 2b-d gezeigten Beobachtungsrichtungen R2 bis R4 relativ zur Vorschubrichtung v konstant gehalten werden.

Da die Steuer- und Regeleinrichtung 20 den Schneidprozess steuert, verfügt diese über die notwendigen Informationen hinsichtlich der momentanen Vorschubrichtung v und kann die Bilderfassungseinrichtung 9, genauer gesagt die Blende 25, geeignet ansteuern. Gegebenenfalls kann die Blende 25 auch mehr als eine Blendenöffnung 25a aufweisen, um eine gleichzeitige Beobachtung des Wechselwirkungsbereichs 18 aus unterschiedlichen Beobachtungsrichtungen R1 bis R4 zu ermöglichen. In diesem Fall sollte die Abbildungsoptik 14 so ausgelegt werden, dass die den unterschiedlichen Beobachtungsrichtungen R1 bis R4 zugeordneten Bilder B1 bis B4 an unterschiedlichen Teilbereichen der Detektorfläche 12a erzeugt werden.

Eine weitere Möglichkeit zur gleichzeitigen Erzeugung mehrerer Bilder aus unterschiedlichen Beobachtungsrichtungen R1, R2,... wird nachfolgend anhand einer in **Fig. 3** gezeigten Vorrichtung 1 erläutert. Im Gegensatz zu der in Fig. 1a gezeigten Vorrichtung 1, bei welcher der Beobachtungsstrahl 7a durch eine nicht zentrische Apertur (Blendenöffnung 25a) im Beobachtungsstrahlengang 7 erzeugt wird und die Abbildung des Beobachtungsstrahlengangs 7 mittels einer einzigen Abbildungslinse 17 zentrisch zur Strahlachse 13 des Laserstrahls 2 erfolgt, weist die in Fig. 3 gezeigte Vorrichtung 1 eine Abbildungsoptik 14 mit einer Mehrzahl von optischen Elementen in Form von Linsenelementen 22, 23 auf, die zur Erzeugung einer Mehrzahl von Bildern auf der Detektorfläche 12a des Detektors 12 dienen, die jeweils aus unterschiedlichen Beobachtungsrichtungen R1, R2, ... aufgenommen werden.

Bei der in **Fig. 4a****-c** dargestellten Detail der Abbildungsoptik 14 weist diese eine Mehrzahl von sechs ersten Zylinderlinsen 22 und von sechs zweiten Zylinderlinsen 23 auf, die in einer Rasteranordnung 24 (Linsenarray) angeordnet sind, um eine Anzahl von 6 x 6 = 36 Bildern auf der Detektorfläche 12a zu erzeugen. Die Abbildungsoptik 14 weist zudem in dem in Fig. 3 gezeigten Beispiel zwei Linsen 17a, 17b in einer Teleskopanordnung auf, um eine Anpassung des Strahlquerschnitts des Beobachtungsstrahlengangs an die Detektorfläche 12a der Kamera 12 zu ermöglichen. Alternativ kann die Abbildung der unterschiedlichen Beobachtungsrichtungen auch nach dem plenoptischen Prinzip bzw. mittels einer Lichtfeld-Kamera erfolgen. Typischer Weise ist es nicht sinnvoll, alle 36 Bilder parallel auszuwerten. Vielmehr wird die Auswertung typischer Weise auf diejenigen Bilder beschränkt, die sich zur Ermittlung einer bestimmten charakteristischen Kenngröße besonders gut eignen.

Die Steuerungseinrichtung 20 steuert in diesem Fall in Abhängigkeit von der momentanen Vorschubrichtung v die Auswerteeinrichtung 19 derart an, dass eine Auswertung nur derjenigen Bilder erfolgt, die aus Beobachtungsrichtungen mit einer für die Ermittlung einer jeweils charakteristischen Kenngröße vorteilhaften Ausrichtung aufgenommen werden, wie weiter unten näher beschrieben wird. Soll zusätzlich auch der Beobachtungs-Winkel β verändert werden, ist es erforderlich, den radialen Abstand der von der Auswerteeinrichtung 19 ausgewerteten Bilder zum Zentrum der Rasteranordnung 24 geeignet zu wählen bzw. zu verändern.

Bei der in Fig. 4a-c gezeigten Rasteranordnung 24 können beispielsweise zwei Bilder B1, B2 für die Ermittlung des Schneidfrontwinkels α herangezogen werden, die zwei Beobachtungsstrahlen 7a, 7b bzw. zwei Beobachtungsrichtungen R1, R2 zugeordnet sind, die im Wesentlichen in Vorschubrichtung v bzw. entgegen der Vorschubrichtung v ausgerichtet sind, welche der negativen bzw. der positiven X-Richtung entspricht. Wie in Fig. 4c zu erkennen ist, weichen aufgrund des Fehlens von Bildpositionen auf der Kamera 12, die in Y-Richtung spiegelsymmetrisch zur X-Achse verlaufen, die Beobachtungsrichtungen R1, R2, entlang derer die beiden Bilder B1, B2 aufgenommen werden, um ca. 5° von der X-Richtung ab. Eine solche Ausrichtung der Beobachtungsrichtungen R1, R2 ist zwar nicht ideal, ermöglicht aber ebenfalls eine schleppende bzw. stechende Beobachtung und ist daher im Regelfall ausreichend, um den Schneidfrontwinkel α mit ausreichender Genauigkeit zu ermitteln.

Es versteht sich, dass in Abhängigkeit von der gewünschten Auflösung auch weniger oder mehr Zylinderlinsen in der Rasteranordnung 24 vorgesehen werden können und dass an Stelle von gekreuzten Zylinderlinsen 22, 23 auch sphärische oder ggf. asphärische Linsen zur Bildung der Rasteranordnung 24 verwendet werden können. Im einfachsten Fall können vier abbildende optische Elemente die Rasteranordnung 24 bilden. Es versteht sich, dass auch ein einzelnes, exzentrisch zur Verlängerung der Strahlachse 13 des Laserstrahls 2 angeordnetes optisches Element ausreichend ist, um ein Bild des Wechselwirkungsbereichs 18 aus einer Beobachtungsrichtung aufzunehmen, die unter einem Winkel β zur Strahlachse 13 des Laserstrahls 2 verläuft. Gegebenenfalls kann die Rasteranordnung 24 auf einen ringförmigen Bereich beschränkt werden, d.h. auf die Rasterelemente im Zentrum der Rasteranordnung 24 kann verzichtet werden, da diese lediglich zur Erzeugung von Bildern genutzt werden können, die einen sehr kleinen Winkel zur Strahlachse 13 des Laserstrahls 2 aufweisen. Gegebenenfalls kann in dem zentralen Bereich der Rasteranordnung 24 eine vergleichsweise große Linse zentrisch angeordnet werden, um eine koaxiale Beobachtung des Wechselwirkungsbereichs 18 mit hoher Auflösung zu ermöglichen.

Eine alternative Ausgestaltung der Abbildungsoptik 14 mit einer Abbildungslinse 25 und einer Einrichtung zur Beeinflussung der Strahlrichtung des Beobachtungsstrahlengangs 7 in Form einer als Umlenkprisma 26 ausgebildeten Strahl-Umlenkeinrichtung ist in **Fig. 5a,b** dargestellt. Das Umlenkprisma 26 weist vier keilförmige Abschnitte mit planen, zur Beobachtungstrahlung bzw. zu deren Strahlachse unter einem Winkel angeordneten Flächen 26a-d auf, die um einen zentralen, planen Bereich 27 herum angeordnet sind. Die ersten beiden Flächen 26a,b dienen als Strahlumlenkbereiche zur Umlenkung der einfallenden Beobachtungsstrahlung in X-Richtung, so dass diese nicht senkrecht zur Mittelebene der Abbildungslinse 25 auf diese auftrifft, wodurch ein erster und zweiter Beobachtungsstrahl 7a, 7b gebildet werden, um ein erstes und zweites Bild B1, B2 auf der Detektorfläche 12a zu erzeugen, die entlang der X-Achse voneinander beabstandet sind.

Die dritte Fläche 26c und die vierte Fläche 26d dienen entsprechend als Strahlumlenkbereiche zur Erzeugung eines dritten und vierten Bildes B3, B4 auf der Detektorfläche 12a, die entlang der Y-Richtung voneinander beabstandet sind. Der zentrale, die Beobachtungsstrahlung nicht umlenkende Bereich 27 dient der Erzeugung eines zentrisch im Beobachtungsstrahlengang 7 angeordneten Bildes B auf der Detektorfläche 12a, welches zur Prozessbeobachtung verwendet werden kann. Bei dem in Fig. 5a,b gezeigten Ausführungsbeispiel ergibt sich insgesamt eine annäherungsweise konvexe Geometrie des Umlenkprismas 26. Es versteht sich, dass auch ein Umlenkprisma mit einer Wesentlichen konkaven Geometrie verwendet werden kann, um die Mehrzahl von Bildern B1 bis B4, ... zu erzeugen.

Die in Fig. 5a,b beispielhaft gezeigte Umlenkanordnung 26 unter Verwendung von vier Flächen 26a-c, die um den zentralen, planen Bereich 27 angeordnet sind und die eine Unterteilung des Winkelbereichs des Beobachtungsstrahlengangs 7 von 360° in vier Segmente mit jeweils 90° erzeugt, ist typischer Weise zu grob, um die Ermittlung des Schneidfrontwinkels α mit ausreichender Genauigkeit durchführen zu können, da die Bedingung, dass die jeweils ausgewählte Beobachtungsrichtung bzw. der jeweils ausgewählte Beobachtungsstrahl 7a, 7b eine Beobachtung entgegen der Vorschubrichtung v des Schneidprozesses ermöglicht, in der Regel nicht erfüllt ist. In der Regel ist zur Ermittlung des Schneidfrontwinkels α mit ausreichender Genauigkeit eine Unterteilung des gesamten zur Verfügung stehenden Winkelbereichs von 360° in mindestens acht bzw. in mindestens sechzehn Winkel-Segmente erforderlich.

Wie weiter oben beschrieben wurde, kann die Steuer- und Regeleinrichtung 20 auch dazu dienen, in Abhängigkeit vom Wert der ermittelten charakteristischen Kenngröße in den Schneidprozess einzugreifen und bestimmte Schneidparameter anzupassen bzw. zu verändern. Anhand von **Fig. 6a****-d** wird nachfolgend der Einfluss des Schneidfrontwinkels α auf die Schnittqualität bzw. auf das Schneidergebnis näher erläutert. Fig. 6a zeigt einen Schnitt bzw. eine Schnittfuge 16, bei welcher der Schneidfrontwinkel α der Schneidfront 16a bei ca. 3° liegt, Fig. 6b zeigt eine Schneidfront 16a mit einem Schneidfrontwinkel α von ca. 4,9°. Beide Schneidfrontwinkel α liegen unterhalb eines vorgegebenen Schneidfrontwinkels α_{G} = 5°, bei dem gerade noch ein Gutschnitt vorliegt. Fig. 6c zeigt eine Schneidfront 16a mit einem Schneidfrontwinkel α von ca. 10°, d.h. der vorgegebene Schneidfrontwinkel α_{G} = 5° ist deutlich überschritten, was zu einer Bartbildung an der Schnittfuge 16 führt. Fig. 6d zeigt schließlich eine Schneidfront 16a, welche bei einem Schnittabriss vorliegt, bei dem der untere Rand des Werkstücks 3 nicht mehr durchtrennt wird. Es versteht sich, dass bei dem in Fig. 6d gezeigten Schnittabriss keine sinnvolle Bestimmung des Schneidfrontwinkels α mehr möglich ist.

Um den in Fig. 6d dargestellten Schnittabriss zu verhindern, stellt die Steuer- und Regeleinrichtung 20 in Abhängigkeit vom momentan von der Auswerteeinrichtung 19 ermittelten Schneidfrontwinkel α die Vorschubgeschwindigkeit v des Schneidprozesses auf einen geeigneten Wert ein. Dem vorgegebenen Schneidfrontwinkel α_{G} ist hierbei eine Vorschubgeschwindigkeit v zugeordnet, die - willkürlich - als 100% festgelegt wird, d.h. es handelt sich um die maximale Vorschubgeschwindigkeit, bei der in der Regel noch ein Gutschnitt möglich ist. Die in Fig. 6a-d dargestellten Vorschubgeschwindigkeiten v1 bis v4 entsprechen 50% (Fig. 6a), ca. 100% (Fig. 6b), 110% (Fig. 6c) sowie 120% oder mehr (Fig. 6d) dieser maximalen Vorschubgeschwindigkeit vₘₐₓ.

Bei der maximalen Vorschubgeschwindigkeit vₘₐₓ handelt es sich um einen Richtwert, der einer bestimmten Bearbeitungsaufgabe zugeordnet ist. Anhand des Schneidfrontwinkels α kann die Vorschubgeschwindigkeit v geeignet eingestellt bzw. geregelt werden, um zu erreichen, das der Schneidfrontwinkel α unterhalb des vorgegebenen Schneidfrontwinkels α_{G} bleibt. Die Vorschubgeschwindigkeit v kann erforderlichenfalls insbesondere auch auf einen Wert unterhalb der maximalen Vorschubgeschwindigkeit vₘₐₓ reduziert werden, um ein Überschreiten des vorgegebenen (maximalen) Schneidfrontwinkels α_{G} zu verhindern.

Die Steuer- und Regeleinrichtung 20 kann auch dazu dienen, weitere Parameter des Schneidprozesses, beispielsweise die Laserleistung, den Gasfluss etc. in Abhängigkeit vom ermittelten Schneidfrontwinkel α oder von weiteren Kenngrößen des Schneidprozesses, beispielsweise der Gratbildung, Rauigkeit und/oder Riefenbildung an der Schnittfuge 16 zu steuern bzw. zu regeln.

Zusammenfassend können auf die oben beschriebene Weise der Schneidfrontwinkel α und/oder weitere charakteristische Kenngrößen des Schneidprozesses ermittelt werden. Insbesondere kann der Schneidfrontwinkel α auch in dem Fall ermittelt werden, dass sich die Schneidfrontunterkante außerhalb des Sichtbereichs 15 befindet, der von der Düsenöffnung 5a der Laserschneiddüse 5 begrenzt wird. Zudem kann die Ermittlung des Schneidfrontwinkels zuverlässig im Sinne einer einfachen Bildverarbeitung ausgeführt werden und die für die Ermittlung von charakteristischen Kenngrößen erforderlichen Bauteile können in den Bearbeitungskopf integriert werden, welcher die Vorrichtung 1 bildet.

Mit Hilfe der weiter oben beschriebenen Vorrichtung 1 oder mit Hilfe einer anderen geeigneten Vorrichtung, welche die Ermittlung einer Überschreitung und/oder Unterschreitung eines vorgegebenen Schneidfrontwinkels α_{G} oder die direkte (absolute) Ermittlung des Schneidfrontwinkels α ermöglicht, kann eine Regelung des Schneidfrontwinkels α auf einen konstanten Soll-Wert α_{G} erfolgen, der im hier beschriebenen Beispiel mit demjenigen Schneidfrontwinkel α_{G} übereinstimmt, dessen Überschreitung und/oder Unterschreitung von der Auswerteeinrichtung 19 ermittelt wird. Zu Regelung des Schneidfrontwinkels α auf den Soll-Wert α_{G} beeinflusst die Regeleinrichtung 20 mindestens einen Stellparameter als Stellgröße für die Regelung, wie nachfolgend anhand von **Fig. 7** am Beispiel einer geradlinigen Kontur 30 erläutert wird, die an einem Werkstück 3 geschnitten wird.

Über dem in Fig. 7 unten dargestellten Werkstück 3 ist ein Geschwindigkeitsprofil der Vorschubgeschwindigkeit v in Abhängigkeit von der Zeit t gezeigt. Die Skalierung der Zeitachse ist so gewählt, dass ein jeweiliger Zeitpunkt mit dem unmittelbar darunter dargestellten Ort des Werkstücks 3 entlang der X-Achse übereinstimmt. Die Vorschubgeschwindigkeit v ist zu Beginn des Schneidprozesses sehr groß, d.h. die Vorschubgeschwindigkeit v liegt mit ca. 140 % deutlich über der maximalen Vorschubgeschwindigkeit v_{MAX}, die wie oben dargestellt wurde einen Richtwert für eine bestimmte Bearbeitungsaufgabe darstellt, die durch die Dicke D des Werkstücks 3 und das Material bzw. den Materialtyp des Werkstücks 3 charakterisiert wird.

Aufgrund der zu Beginn zu großen Vorschubgeschwindigkeit v wird ein Sollwert S_{Soll} der Steigung S der Schneidfront 16a unterschritten, der im gezeigten Beispiel mit einem Soll-Wert α_{G} für den Schneidfrontwinkel α übereinstimmt, der bei α_{G} = 4° liegt. Typische Soll-Werte α_{G} für den Schneidfrontwinkel α liegen zwischen ca. 2° und ca. 6°, insbesondere zwischen ca. 3° und ca. 5°. Aufgrund der Überschreitung des Soll-Werts α_{G} des Schneidfrontwinkels α (bzw. der Unterschreitung des Sollwerts S_{Soll} der Schneidfrontsteigung S) kommt es zu einem Schnittabriss, d.h. das Werkstück 3 wird von dem Laserstrahl 2 nicht vollständig durchgeschnitten, wie anhand der in Fig. 7 gezeigten Unterseite des Werkstücks 3 gut zu erkennen ist.

Die Überschreitung des Soll-Werts α_{G} des Schneidfrontwinkels α wird von der Auswerteeinrichtung 19 auf die weiter oben beschriebene Weise erkannt. Um die momentane Steigung S_{Ist} der Schneidfront 16a auf dem Soll-Wert S_{Soll} zu halten (und somit auch den Ist-Wert des Schneidfrontwinkels α auf dem Soll-Wert α_{G} zu halten), weist die Regeleinrichtung 20 einen unstetigen Regler, im gezeigten Beispiel einen Zweipunktregler 31, auf (vgl. Fig. 1a und Fig. 3). Der Zweipunktregler 31 erhöht oder verringert die Vorschubgeschwindigkeit v je nachdem, ob der Ist-Wert S_{Ist} der Steigung der Schneidfront 16a über dem Soll-Wert S_{Soll} oder unter dem Soll-Wert S_{Soll} liegt. Entsprechend wird die Vorschubgeschwindigkeit v erhöht oder verringert, je nachdem, ob der Ist-Wert der Schneidfrontsteigung α unter oder über dem Soll-Wert α_{G} liegt. An Stelle des Zweipunktreglers 31 können auch andere unstetige Regler, beispielsweise Dreipunktregler oder dergleichen, in die Regeleinrichtung 20 integriert sein, um die Regelung des Schneidfrontwinkels α auf den Soll-Wert α_{Soll} vorzunehmen.

Während der im Zusammenhang mit Fig. 7 beschriebenen Regelung der Vorschubgeschwindigkeit v wird die Leistung P des Laserstrahls 2 auf einem konstanten, maximalen Wert P_{MAX} gehalten (vgl. Fig. 1a), der für die jeweilige Bearbeitungsaufgabe, d.h. Material des Werkstücks 3 und Dicke D des Werkstücks 3 sowie die verwendete Laserquelle einen Richtwert darstellt. Bei üblichen Materialien wie z.B. Stählen wird in der Regel die maximal mögliche Leistung P_{MAX} der Laserquelle gewählt. Die maximale Leistung P_{MAX} wird typischer Weise erreicht, wenn es sich bei der zu schneidenden Kontur wie in Fig. 7 gezeigt ist um eine vergleichsweise lange, geradlinige Kontur 30 (mit Krümmungsradius unendlich) handelt.

Es hat sich als günstig herausgestellt, abhängig von der zu schneidenden Kontur an dem Werkstück 3 unterschiedliche Stellparameter für die Regelung des Schneidfrontwinkels α zu verwenden. Beispielsweise kann die Vorschubgeschwindigkeit v als Stellgröße verwendet werden, wenn die Leistung des Hochenergiestrahls ihren maximalen Wert P_{MAX} erreicht, was typischer Weise beim Schneiden von längeren geraden Konturen (mit unendlich großem Krümmungsradius) der Fall ist (s.o.).

Handelt es sich bei der zu schneidenden Kontur um eine vergleichsweise kleine Kontur 34, wie sie in **Fig. 3a** dargestellt ist und welche einen Krümmungsradius R aufweist, der so klein ist, dass die maximale Vorschubgeschwindigkeit v_{MAX} durch die Dynamik der an der Bewegung zwischen dem Laserstrahl 2 und dem Werkstück 3 beteiligten Bewegungsachsen mit Ihrer maximalen Achsbeschleunigung in der Größenordnung von zirka 1 g begrenzt wird. Zum Schneiden einer kleinen Kontur 34 kann insbesondere eine oder es können ggf. mehrere Zusatzachse(n) verwendet werden, d.h. redundante, hoch dynamische Achsen mit einem kleinen Bewegungs- bzw. Verfahrbereich. Bei dem in Fig. 3a gezeigten Beispiel wird die Leistung P der Laserquelle 33 der Vorrichtung 1 als Stellgröße für die Regelung des Schneidfrontwinkels α verwendet. Die Regelung kann hierbei analog zu dem in Zusammenhang mit Fig. 7 beschriebenen Beispiel erfolgen. Die Vorschubgeschwindigkeit v wird hierbei typischer Weise auf dem maximal möglichen Wert v_{MAX} gehalten, der abhängig von der Bewegung entlang der zu schneidenden Kontur 34, insbesondere in Abhängigkeit vom ggf. nicht konstanten Krümmungsradius R, variieren kann.

Beim Schneiden von sehr kleinen Konturen 34 ist es ggf. günstig, an Stelle eines Dauerstrichbetriebs die Leistung P des von der Laserquelle 33 erzeugten Laserstrahls 2 zu modulieren. Insbesondere kann in diesem Fall die Laserquelle 33 in einen Pulsbetrieb umgeschaltet werden. In diesem Fall kann die Modulations- bzw. Pulsfrequenz f_{M} des Laserstrahls 2 als Stellparameter für die Regelung des Schneidfrontwinkels α verwendet werden. Alternativ oder zusätzlich kann ggf. die Pulsdauer der Pulse des von der Laserquelle 33 erzeugten, gepulsten Laserstrahls 2 als Stellparameter für die Regelung des Schneidfrontwinkels α verwendet werden.

An Stelle der weiter oben in Zusammenhang mit Fig. 7 beschriebenen Ermittlung der Überschreitung eines vorgegebenen Schneidfrontwinkels α_{G} kann auch der Absolutwert des Schneidfrontwinkels α bestimmt werden. Dies kann beispielsweise auf die in der eingangs zitierten WO 2012/107331 A1 beschriebene Weise erfolgen, d.h. indem in dem in Fig. 3a gezeigten, durch die kreisförmige Innenkontur 5b begrenzten Bild der Oberfläche des Werkstücks 3 der Abstand A zwischen der Schneidfrontoberkante und der Schneidfrontunterkante der Schneidfront 16a entlang der in Fig. 3a gestrichelt dargestellten Spaltmitte gemessen wird. Der Schneidfrontwinkel α ergibt sich aus dem gemessenen Abstand A und der Dicke D des Werkstücks 3 gemäß der Formel α = artan (A / D).

Ist der Absolutwert des Schneidfrontwinkels α bekannt, hat es sich als günstig erwiesen, in der Regeleinrichtung 20 an Stelle eines unstetigen Reglers 31 einen stetigen Regler 32, beispielsweise einen PID-Regler, zu verwenden. Es versteht sich, dass die Vorrichtung 1 sowohl zur Ermittlung des Absolutwerts des Schneidfrontwinkels α als auch zur Ermittlung der Überschreitung des vorgegebenen Schneidfrontwinkels α_{G} ausgebildet sein kann. Die Wahl der Ermittlungsmethode bzw. der Regelungsmethode kann beispielsweise davon abhängen, ob die Schneidfront 16a bei dem Schneidprozess gut zu erkennen ist oder ob diese ggf. durch das Prozesseigenleuchten nur schwer zu identifizieren ist, so dass der Abstand A nicht genau genug bestimmt werden kann.

Zusammenfassend kann durch die hier beschriebene Regelung des Schneidfrontwinkels α auf einen konstanten Soll-Wert α_{G} die Produktivität und die Prozessfähigkeit des Schneidprozesses optimiert werden. Insbesondere kann auf diese Weise ggf. ein "autarker" Schneidprozess realisiert werden, bei dem die Vorrichtung 1 den optimalen Arbeitspunkt für unterschiedliche Materialien bzw. zu schneidende Konturen selbst einstellt.

## Patentansprüche

1. Vorrichtung zur Überwachung, insbesondere zur Regelung, eines Schneidprozesses an einem Werkstück (3), umfassend:
ein Fokussierelement (4) zur Fokussierung eines Hochenergiestrahls (2), insbesondere eines Laserstrahls, auf das Werkstück (3),
eine Bilderfassungseinrichtung (9) zur Erfassung eines zu überwachenden Bereichs (15) an dem Werkstück (3), der einen Wechselwirkungsbereich (18) des Hochenergiestrahls (2) mit dem Werkstück (3) umfasst, sowie eine Auswerteeinrichtung (19), die ausgebildet ist, anhand des erfassten Wechselwirkungsbereichs (18) mindestens eine charakteristische Kenngröße (a) des Schneidprozesses, insbesondere einer bei dem Schneidprozess gebildeten Schnittfuge (16), zu ermitteln, wobei die Auswerteeinrichtung (19) ausgebildet ist, anhand des erfassten Wechselwirkungsbereichs (18) einen Schneidfrontwinkel (a) der Schnittfuge (16) und/oder eine Überschreitung und/oder Unterschreitung eines vorgegebenen Schneidfrontwinkels (α_{G}) der Schnittfuge (16) als charakteristische Kenngröße(n) des Schneidprozesses zu ermitteln, und wobei die Vorrichtung (1) weiter umfasst:
eine Regeleinrichtung (20) zur Regelung des Schneidfrontwinkels (a) auf einen vorgegebenen, konstanten Wert (α_{G}) durch Beeinflussen mindestens eines Stellparameters (v, P) des Schneidprozesses,
**dadurch gekennzeichnet,**
**dass** die Regeleinrichtung (20) ausgebildet ist, den Stellparameter (v, P) zur Regelung des Schneidfrontwinkels (a) in Abhängigkeit von einer an dem Werkstück (3) zu schneidenden Kontur (31, 34) auszuwählen, wobei die Regeleinrichtung (20) ausgebildet ist, als Stellparameter zur Regelung des Schneidfrontwinkels (a) die Vorschubgeschwindigkeit (v) zwischen dem Hochenergiestrahl (2) und dem Werkstück (3) zu beeinflussen, wenn die Vorschubgeschwindigkeit (v) durch das Material und die Dicke (D) des Werkstücks (3) und nicht durch die Geometrie einer an dem Werkstück (3) zu schneidenden Kontur (31) auf einen maximalen Wert (v_{MAX}) begrenzt ist, und wobei die Regeleinrichtung (20) ausgebildet ist, als Stellparameter zur Regelung des Schneidfrontwinkels (α) die Leistung (P) des Hochenergiestrahls (2) zu beeinflussen, wenn die Vorschubgeschwindigkeit (v) zwischen dem Hochenergiestrahl (2) und dem Werkstück (3) durch die Geometrie einer an dem Werkstück (3) zu schneidenden Kontur (34) auf einen maximalen Wert (v_{MAX}) begrenzt ist.

2. Vorrichtung nach Anspruch 1, bei welcher die Regeleinrichtung (20) ausgebildet ist, während der Beeinflussung der Vorschubgeschwindigkeit (v) die Leistung (P) des Hochenergiestrahls (2) auf einem konstanten Wert (P_{MAX}) zu halten, wenn die Vorschubgeschwindigkeit (v) durch das Material und die Dicke (D) des Werkstücks (3) auf den maximalen Wert (v_{MAX}) begrenzt ist.

3. Vorrichtung nach einem der Ansprüche 1 oder 2, bei der die Regeleinrichtung (20) ausgebildet ist, während der Beeinflussung der Leistung (P) des Hochenergiestrahls (2) die Vorschubgeschwindigkeit (v) auf dem maximalen Wert (v_{MAX}) zu halten, wenn die Vorschubgeschwindigkeit (v) zwischen dem Hochenergiestrahl (2) und dem Werkstück (3) durch die Geometrie der an dem Werkstück (3) zu schneidenden Kontur (34) auf den maximalen Wert (v_{MAX}) begrenzt ist.

4. Vorrichtung nach einem der vorhergehenden Ansprüche, bei welcher die Regeleinrichtung (20) ausgebildet ist, die Leistung (P) des Hochenergiestrahls (2) zu modulieren und als Stellparameter zur Regelung des Schneidfrontwinkels (a) die Pulsfrequenz (f_{M}) und/oder die Pulsdauer der gepulst erzeugten Leistung (P) des Hochenergiestrahls (2) zu beeinflussen, wenn die Vorschubgeschwindigkeit (v) zwischen dem Hochenergiestrahl (2) und dem Werkstück (3) durch die Geometrie der an dem Werkstück (3) zu schneidenden Kontur (34) auf den maximalen Wert (v_{MAX}) begrenzt ist.

5. Vorrichtung nach einem der vorhergehenden Ansprüche, bei der die Auswerteeinrichtung (19) ausgebildet ist, eine Überschreitung und/oder Unterschreitung des vorgegebenen Schneidfrontwinkels (α_{G}) der Schnittfuge (16) zu ermitteln, und bei der die Regeleinrichtung (20) zur Regelung des Schneidfrontwinkels (a) einen unstetigen Regler (31), insbesondere einen Zweipunktregler oder einen Dreipunktregler, aufweist.

6. Vorrichtung nach einem der vorhergehenden Ansprüche, bei der die Auswerteeinrichtung (19) ausgebildet ist, den Schneidfrontwinkel (a) der Schnittfuge (16) zu ermitteln, und bei der die Regeleinrichtung (20) zur Regelung des Schneidfrontwinkels (a) einen stetigen Regler (32), insbesondere einen PID-Regler, aufweist.

7. Verfahren zur Überwachung, insbesondere zur Regelung, eines Schneidprozesses an einem Werkstück (3), umfassend:
Fokussieren eines Hochenergiestrahls (2), insbesondere eines Laserstrahls, auf das Werkstück (3),
Erfassen eines zu überwachenden Bereichs (15) des Werkstücks (3), der einen Wechselwirkungsbereich (18) des Hochenergiestrahls (2) mit dem Werkstück (3) umfasst,
Ermitteln mindestens einer charakteristischen Kenngröße (a) des Schneidprozesses, insbesondere einer bei dem Schneidprozess gebildeten Schnittfuge (16), anhand des erfassten Wechselwirkungsbereichs (18),
Ermitteln eines Schneidfrontwinkels (a) der Schnittfuge (16) und/oder einer Überschreitung und/oder Unterschreitung eines vorgegebenen Schneidfrontwinkels (α_{G}) der Schnittfuge (16) als charakteristische Kenngröße(n) des Schneidprozesses, sowie
Regeln des Schneidfrontwinkels (a) auf einen vorgegebenen, konstanten Wert (α_{G}) durch Beeinflussen mindestens eines Stellparameters (v, P) des Schneid prozesses,
**dadurch gekennzeichnet,**
**dass** der Stellparameter (v, P) zur Regelung des Schneidfrontwinkels (a) in Abhängigkeit von einer zu schneidenden Kontur (31, 34) an dem Werkstück (3) ausgewählt wird,
wobei als Stellparameter zur Regelung des Schneidfrontwinkels (a) die Vorschubgeschwindigkeit (v) zwischen dem Hochenergiestrahl (2) und dem Werkstück (3) beeinflusst wird, wenn die Vorschubgeschwindigkeit (v) durch das Material und die Dicke (D) des Werkstücks (3) und nicht durch die Geometrie einer an dem Werkstück (3) zu schneidenden Kontur (34) auf einen maximalen Wert (v_{MAX}) begrenzt wird, und wobei als Stellparameter zur Regelung des Schneidfrontwinkels (a) die Leistung (P) des Hochenergiestrahls (2) beeinflusst wird, wenn die Vorschubgeschwindigkeit (v) zwischen dem Hochenergiestrahl (2) und dem Werkstück (3) durch die Geometrie einer an dem Werkstück (3) zu schneidenden Kontur (34) auf einen maximalen Wert (v_{MAX}) begrenzt wird.

8. Verfahren nach Anspruch 7, bei dem während der Beeinflussung der Vorschubgeschwindigkeit (v) die Leistung (P) des Hochenergiestrahls (2) auf einem konstanten Wert (P_{MAX}) gehalten wird, wenn die Vorschubgeschwindigkeit (v) durch das Material und die Dicke (D) des Werkstücks (3) auf den maximalen Wert (v_{MAX}) begrenzt ist.

9. Verfahren nach einem der Ansprüche 7 oder 8, bei dem während der Beeinflussung der Leistung (P) des Hochenergiestrahls (2) die Vorschubgeschwindigkeit (v) auf dem maximalen Wert (v_{MAX}) gehalten wird, wenn die Vorschubgeschwindigkeit (v) zwischen dem Hochenergiestrahl (2) und dem Werkstück (3) durch die Geometrie der an dem Werkstück (3) zu schneidenden Kontur (34) auf den maximalen Wert (v_{MAX}) begrenzt ist.

10. Verfahren nach einem der Ansprüche 7 bis 9, bei dem die Leistung (P) des Hochenergiestrahls (2) moduliert wird und als Stellparameter zur Regelung des Schneidfrontwinkels (a) die Pulsfrequenz (f_{M}) und/oder die Pulsdauer der gepulst erzeugten Leistung (P) des Hochenergiestrahls (2) beeinflusst wird, wenn die Vorschubgeschwindigkeit (v) zwischen dem Hochenergiestrahl (2) und dem Werkstück (3) durch die Geometrie der an dem Werkstück (3) zu schneidenden Kontur (34) auf den maximalen Wert (v_{MAX}) begrenzt ist.

11. Verfahren nach einem der Ansprüche 7 bis 10, bei dem der konstante Wert (α_{G}), auf den der Schneidfrontwinkel (a) geregelt wird, zwischen 2° und 6°, bevorzugt zwischen 3° und 5° liegt.

## Claims

1. A device for monitoring, in particular for regulating, a cutting process on a workpiece (3), comprising:
a focusing element (4) for focusing a high-energy beam (2), in particular a laser beam, onto the workpiece (3), an image capture apparatus (9) for capturing a region (15) at the workpiece (3) to be monitored, said region comprising an interaction region (18) of the high-energy beam (2) with the workpiece (3), and an evaluation apparatus (19) embodied to determine at least one characteristic variable (α) of the cutting process, in particular of a kerf (16) formed during the cutting process, on the basis of the captured interaction region (18),
wherein the evaluation apparatus (19) is embodied to determine a cutting front angle (α) of the kerf (16) and/or an overshoot and/or undershoot of a predetermined cutting front angle (α_{G}) of the kerf (16) as characteristic variable(s) of the cutting process on the basis of the captured interaction region (18), and
wherein the device (1) further comprises: a control apparatus (20) for regulating the cutting front angle (α) to a predetermined constant value (α_{G}) by influencing at least one control parameter (v, P) of the cutting process,
**characterized in that**
the control apparatus (20) is embodied to select the control parameter (v, P) for regulating the cutting front angle (α) in a manner dependent on a contour (31, 34) to be cut into the workpiece (3)
wherein the control apparatus (20) is embodied to influence the advance speed (v) between the high-energy beam (2) and the workpiece (3) as a control parameter for regulating the cutting front angle (α) if the advance speed (v) is restricted to a maximum value (v_{MAX}) by the material and the thickness (D) of the workpiece (3) and is not restricted to a maximum value (v_{MAX}) by the geometry of a contour (34) to be cut into the workpiece (3), and wherein
the control apparatus (20) is embodied to influence the power (P) of the high-energy beam (2) as a control parameter for regulating the cutting front angle (α) if the advance speed (v) between the high-energy beam (2) and the workpiece (3) is restricted to a maximum value (v_{MAX}) by the geometry of a contour (34) to be cut into the workpiece (3).

2. The device as claimed in claim 1, wherein the control apparatus (20) is embodied to keep the power (P) of the high-energy beam (2) at a constant value (P_{MAX}) while influencing the advance speed (v) if the advance speed (v) is restricted to a maximum value (v_{MAX}) by the material and the thickness (D) of the workpiece (3).

3. The device as claimed in one of the claims 1 or 2, wherein the control apparatus (20) is embodied to keep the advance speed (v) at the maximum value (v_{MAX}) while influencing the power (P) of the high-energy beam (2) if the advance speed (v) between the high-energy beam (2) and the workpiece (3) is restricted to a maximum value (v_{MAX}) by the geometry of a contour (34) to be cut into the workpiece (3).

4. The device as claimed in one of the preceding claims, wherein the control apparatus (20) is embodied to modulate the power (P) of the high-energy beam (2) and influence the pulse frequency (fM) and/or the pulse duration of the pulsed generated power (P) of the high-energy beam (2) as control parameter for regulating the cutting front angle (α) if the advance speed (v) between the high-energy beam (2) and the workpiece (3) is restricted to the maximum value (v_{MAX}) by the geometry of the contour (34) to be cut into the workpiece (3).

5. The device according to any one of the preceding claims, wherein the evaluation apparatus (19) is embodied to determine an overshoot and/or undershoot of the predetermined cutting front angle (α_{G}) of the kerf (16) and wherein the control apparatus (20) for regulating the cutting front angle (α) has a discontinuous-action controller (31), in particular a two-position controller or a three-position controller.

6. The device according to one of the preceding claims, wherein the evaluation apparatus (19) is embodied to determine a cutting front angle (α) of the kerf (16) and wherein the control apparatus (20) for regulating the cutting front angle (α) has a continuous-action controller (32), in particular a PID controller.

7. A method for monitoring, in particular for regulating, a cutting process on a workpiece (3), comprising:
focusing a high-energy beam (2), in particular a laser beam, onto the workpiece (3),
capturing a region (15) of the workpiece (3) to be monitored, said region comprising an interaction region (18) of the high-energy beam (2) with the workpiece (3), determining at least one characteristic variable (α) of the cutting process, in particular of a kerf (16) formed during the cutting process, on the basis of the captured interaction region (18),
determining a cutting front angle (α) of the kerf (16) and/or of an overshoot and/or undershoot of a predetermined cutting front angle (α_{G}) of the kerf (16) as characteristic parameter(s) of the cutting process, as well as
regulating the cutting front angle (α) to a predetermined constant value (α_{G}) by influencing at least one control parameter (v, P) of the cutting process,
**characterized in that**
the control parameter (v, P) for regulating the cutting front angle (α) is selected in dependence on a contour (31, 34) to be cut into the workpiece (3),
wherein as a control parameter for regulating the cutting front angle (α), the advance speed (v) between the high-energy beam (2) and the workpiece (3) is influenced if the advance speed (v) is restricted to a maximum value (v_{MAX}) by the material and the thickness (D) of the workpiece (3) and not by the geometry of a contour (34) to be cut into the workpiece (3), and
wherein as control parameter for regulating the cutting front angle (α) the power (P) of the high-energy beam (2) is influenced if the advance speed (v) between the high-energy beam (2) and the workpiece (3) is limited to a maximum value (v_{MAX}) by the geometry of a contour (34) to be cut into the workpiece (3).

8. Method according to claim 7, wherein while influencing the advance speed (v), the power (P) of the high-energy beam (2) is maintained at a constant value (P_{MAX}) if the advance speed (v) is restricted to the maximum value (v_{MAX}) by the material and the thickness (D) of the workpiece (3).

9. Method according to one of the claims 7 or 8, wherein while influencing the power (P) of the high-energy beam (2), the advance speed (v) is held at the maximum value (v_{MAX}) if the advance speed (v) between the high-energy beam (2) and the workpiece (3) is restricted to the maximum value (v_{MAX}) by the geometry of the contour (34) to be cut into the workpiece (3).

10. Method according to one of the claims 7 to 9, wherein the power (P) of the high-energy beam (2) is modulated and the pulse frequency (f_{M}) and/or the pulse duration of the pulsed generated power (P) of the high-energy beam (2) is influenced as control parameter for regulating the cutting front angle (α) if the advance speed (v) between the high-energy beam (2) and the workpiece (3) is restricted to the maximum value (v_{MAX}) by the geometry of the contour (34) to be cut into the workpiece (3).

11. Method according to one of the claims 7 to 10, wherein the constant value (α_{G}), to which the cutting front angle (α) is regulated, is between 2° and 6°, preferably between 3° and 5°.

## Revendications

1. Dispositif dévolu à la surveillance, en particulier à la régulation d'un processus de coupe exécuté sur une pièce (3), comprenant :
un élément de focalisation (4) conçu pour focaliser, vers ladite pièce (3), un faisceau (2) de haute énergie et notamment un faisceau laser,
un appareil (9) d'acquisition d'images conçu pour détecter, sur la pièce (3), une zone (15) devant être surveillée et incluant une zone (18) d'interaction dudit faisceau (2) de haute énergie avec ladite pièce (3),
ainsi qu'un appareil d'évaluation (19) réalisé en vue de spécifier, à l'appui de la zone d'interaction (18) détectée, au moins une grandeur caractéristique (a) du processus de coupe, en particulier d'une saignée (16) formée lors dudit processus de coupe, sachant que ledit appareil d'évaluation (19) est réalisé en vue de spécifier à l'appui de ladite zone d'interaction (18) détectée, en tant que grandeur(s) caractéristique(s) dudit processus de coupe, un angle (a) de front de coupe de la saignée (16) et/ou un dépassement positif et/ou un dépassement négatif d'un angle préétabli (αG) de front de coupe de ladite saignée (16), et sachant que ledit dispositif (1) comprend, par ailleurs :
un appareil de régulation (20) conçu pour réguler ledit angle (a) de front de coupe sur une valeur constante préétablie (αG), par influence exercée sur au moins un paramètre de réglage (v, P) dudit processus de coupe,
**caractérisé par le fait**
**que** l'appareil de régulation (20) est réalisé en vue de sélectionner le paramètre de réglage (v, P), affecté à la régulation de l'angle (a) de front de coupe, en fonction d'un profil (31, 34) devant être découpé sur la pièce (3),
sachant que
ledit appareil de régulation (20) est réalisé en vue d'influencer la vitesse d'avance (v) entre le faisceau (2) de haute énergie et la pièce (3), en tant que paramètre de réglage affecté à la régulation de l'angle (a) de front de coupe, lorsque ladite vitesse d'avance (v) est limitée à une valeur maximale (V_{MAX}) par le matériau et par l'épaisseur (D) de la pièce (3), et non pas par la géométrie d'un profil (31) devant être découpé sur ladite pièce (3),
et sachant que
ledit appareil de régulation (20) est réalisé en vue d'influencer la puissance (P) dudit faisceau (2) de haute énergie, en tant que paramètre de réglage affecté à la régulation dudit angle (a) de front de coupe, lorsque ladite vitesse d'avance (v), entre ledit faisceau (2) de haute énergie et ladite pièce (3), est limitée à une valeur maximale (V_{MAX}) par la géométrie d'un profil (34) devant être découpé sur ladite pièce (3).

2. Dispositif selon la revendication 1, dans lequel l'appareil de régulation (20) est réalisé en vue de maintenir la puissance (P) du faisceau (2) de haute énergie à une valeur constante (P_{MAX}), au cours de l'influence exercée sur la vitesse d'avance (v), lorsque ladite vitesse d'avance (v) est limitée à la valeur maximale (V_{MAX}) par le matériau et par l'épaisseur (D) de la pièce (3).

3. Dispositif selon l'une des revendications 1 ou 2, dans lequel l'appareil de régulation (20) est réalisé en vue de maintenir la vitesse d'avance (v) à la valeur maximale (V_{MAX}), au cours de l'influence exercée sur la puissance (P) du faisceau (2) de haute énergie, lorsque ladite vitesse d'avance (v), entre ledit faisceau (2) de haute énergie et la pièce (3), est limitée à ladite valeur maximale (V_{MAX}) par la géométrie du profil (34) devant être découpé sur ladite pièce (3).

4. Dispositif selon l'une des revendications précédentes, dans lequel l'appareil de régulation (20) est réalisé en vue de moduler la puissance (P) du faisceau (2) de haute énergie et d'influencer, en tant que paramètre(s) de réglage affecté(s) à la régulation de l'angle (a) de front de coupe, la fréquence d'impulsion (fM) et/ou la durée d'impulsion de ladite puissance (P) dudit faisceau (2) de haute énergie, engendrée en mode pulsé, lorsque la vitesse d'avance (v), entre ledit faisceau (2) de haute énergie et la pièce (3), est limitée à la valeur maximale (V_{MAX}) par la géométrie du profil (34) devant être découpé sur ladite pièce (3).

5. Dispositif selon l'une des revendications précédentes, dans lequel l'appareil d'évaluation (19) est réalisé en vue de spécifier un dépassement positif et/ou un dépassement négatif de l'angle préétabli (αG) de front de coupe de la saignée (16) ; et dans lequel l'appareil de régulation (20) est muni d'un régulateur discontinu (31), en particulier d'un régulateur à deux positions ou d'un régulateur à trois positions, en vue de réguler l'angle (a) de front de coupe.

6. Dispositif selon l'une des revendications précédentes, dans lequel l'appareil d'évaluation (19) est réalisé en vue de spécifier l'angle (a) de front de coupe de la saignée (16) ; et dans lequel l'appareil de régulation (20) est doté d'un régulateur continu (32), en particulier d'un régulateur PID, en vue de réguler ledit angle (a) de front de coupe.

7. Procédé de surveillance, en particulier de régulation d'un processus de coupe exécuté sur une pièce (3), consistant à :
focaliser, vers ladite pièce (3), un faisceau (2) de haute énergie et notamment un faisceau laser,
détecter une zone (15) de la pièce (3) qui doit être surveillée, et inclut une zone (18) d'interaction dudit faisceau (2) de haute énergie avec ladite pièce (3),
spécifier, à l'appui de la zone d'interaction (18) détectée, au moins une grandeur caractéristique (a) du processus de coupe, en particulier d'une saignée (16) formée lors dudit processus de coupe,
spécifier, en tant que grandeur(s) caractéristique(s) dudit processus de coupe, un angle (a) de front de coupe de la saignée (16) et/ou un dépassement positif et/ou un dépassement négatif d'un angle préétabli (αG) de front de coupe de ladite saignée (16),
ainsi qu'à réguler ledit angle (a) de front de coupe sur une valeur constante préétablie (α_{G}), par influence exercée sur au moins un paramètre de réglage (v, P) dudit processus de coupe,
**caractérisé par le fait**
**que** le paramètre de réglage (v, P), affecté à la régulation de l'angle (a) de front de coupe, est sélectionné en fonction d'un profil (31, 34) devant être découpé sur la pièce (3),
la vitesse d'avance (v) entre le faisceau (2) de haute énergie et la pièce (3) étant influencée, en tant que paramètre de réglage affecté à la régulation de l'angle (a) de front de coupe, lorsque ladite vitesse d'avance (v) est limitée à une valeur maximale (V_{MAX}) par le matériau et par l'épaisseur (D) de la pièce (3), et non pas par la géométrie d'un profil (31) devant être découpé sur ladite pièce (3), et
la puissance (P) dudit faisceau (2) de haute énergie étant influencée, en tant que paramètre de réglage affecté à la régulation dudit angle (a) de front de coupe, lorsque ladite vitesse d'avance (v), entre ledit faisceau (2) de haute énergie et ladite pièce (3), est limitée à une valeur maximale (V_{MAX}) par la géométrie d'un profil (34) devant être découpé sur ladite pièce (3).

8. Procédé selon la revendication 7, dans lequel la puissance (P) du faisceau (2) de haute énergie est maintenue à une valeur constante (P_{MAX}), au cours de l'influence exercée sur la vitesse d'avance (v), lorsque ladite vitesse d'avance (v) est limitée à la valeur maximale (V_{MAX}) par le matériau et par l'épaisseur (D) de la pièce (3).

9. Procédé selon l'une des revendications 7 ou 8, dans lequel la vitesse d'avance (v) est maintenue à la valeur maximale (V_{MAX}), au cours de l'influence exercée sur la puissance (P) du faisceau (2) de haute énergie, lorsque ladite vitesse d'avance (v), entre ledit du faisceau (2) de haute énergie et la pièce (3), est limitée à ladite valeur maximale (V_{MAX}) par la géométrie du profil (34) devant être découpé sur ladite pièce (3).

10. Procédé selon l'une des revendications 7 à 9, dans lequel la puissance (P) du faisceau (2) de haute énergie est modulée, et la fréquence d'impulsion (fM) et/ou la durée d'impulsion de ladite puissance (P) dudit faisceau (2) de haute énergie, engendrée en mode pulsé, est (sont) influencée(s), en tant que paramètre(s) de réglage affecté(s) à la régulation de l'angle (a) de front de coupe, lorsque la vitesse d'avance (v), entre ledit faisceau (2) de haute énergie et la pièce (3), est limitée à la valeur maximale (V_{MAX}) par la géométrie du profil (34) devant être découpé sur ladite pièce (3).

11. Procédé selon l'une des revendications 7 à 10, dans lequel la valeur constante (αG), sur laquelle l'angle (a) de front de coupe est régulé, est comprise entre 2° et 6°, de préférence entre 3° et 5°.
